# EUROPEAN PATENT SPECIFICATION

(11) **EP 2 251 925 B1**
(45) Date of publication and mention of the grant of the patent: **04.07.2012**
(21) Application number: 09720052.1
(22) Date of filing: 12.02.2009
(51) Int. Cl.: H01M 8/02, H01M 8/10, H01M 8/00

(54) **Method of recycling fuel cells**
Verfahren zum Verwerten von Brennstoffzellen
Procédé de recyclage de piles à combustible

(30) Priority: 11.03.2008 JP 2008061178; 11.03.2008 JP 2008061177; 11.03.2008 JP 2008061176; 11.03.2008 JP 2008061175
(43) Date of publication of application: 17.11.2010
(73) Proprietor: Panasonic Corporation, Kadoma-shi Osaka 571-8501 (JP)
(72) Inventor: NAKAGAWA, Takashi, 7F Twin 21 OBP Panasonic Tower, 2-1-61, Shiromi, Chuo-ku, Osaka 540-6207 (JP); TERANISHI, Masatoshi, 7F Twin 21 OBP Panasonic Tower, 2-1-61, Shiromi, Chuo-ku, Osaka 540-6207 (JP)
(74) Representative: Grünecker, Kinkeldey, Stockmair & Schwanhäusser
(86) International application number: PCT/JP2009/000557
(87) International publication number: WO 2009/113240

(56) References cited:
- EP-A1- 1 643 577
- WO-A1-2004/091024
- WO-A1-2006/112402
- WO-A1-2008/050611
- JP-A- 2003 115 319
- JP-A- 2003 119 078
- JP-A- 2004 179 124
- JP-A- 2004 214 133
- JP-A- 2004 319 461
- JP-A- 2006 207 003
- JP-A- 2006 277 965
- JP-A- 2007 179 809
- JP-A- 2007 250 249
- JP-A- 2008 066 118
- US-A1- 2002 192 537
- US-A1- 2006 127 716
- US-A1- 2008 063 918

## Description

The present invention relates to a method of recycling fuel cells.

A fuel cell basically consists of a polymer electrolyte membrane which selectively transports hydrogen ions; and a pair of catalyst electrodes (a fuel electrode and an air electrode) which hold the polymer electrolyte membrane between them. Electrical energy can be continuously taken out from a fuel cell having the above-described configuration by supplying a fuel gas (which contains hydrogen) to a fuel electrode (anode) and an oxide gas (which contains oxygen) to an air electrode (cathode).

The polymer electrolyte membrane is composed of an electrolyte having a polymer ion-exchange membrane, such as a fluoropolymer-based ion-exchange membrane having sulfonic acid groups or a hydrocarbon resin-based ion-exchange membrane, etc.

Each of the catalyst electrodes is composed of a catalyst layer which is provided on the polymer electrolyte membrane promotes oxidation-reduction reactions in the catalyst electrode; and a gas diffusion layer which is provided on the outer side of the catalyst layer and has air permeability and conductivity. Furthermore, the gas diffusion layer is composed of a carbon coating layer which is located on the catalyst layer side and improves the contact with the catalyst layer; and a gas diffusion base layer which diffuses gas and supply the catalyst layer with gas. A catalyst layer of the fuel electrode contains, for example, platinum or an alloy of platinum and ruthenium. A catalyst layer of the air electrode contains, for example, platinum or an alloy of platinum and cobalt. An integrated unit of such a polymer electrolyte membrane and a pair of catalyst electrodes (catalyst layers, carbon coating layers, and gas diffusion base layers) is called a membrane electrode assembly (hereinafter, also referred to as an "MEA").

MEAs can be electrically connected to one another in series by being stacked together. At this time, in order to prevent a fuel gas and an oxide gas from being mixed together and to electrically connect the MEAs in series, a separator having conductivity is disposed between each adjacent pair of MEAs. An MEA being held between a pair of separators is called a "fuel cell" or simply "cell" and a stack of a plurality of fuel cells is called a "fuel cell stack" or simply "stack".

As a catalyst material of MEAs, as described above, very expensive rare metals such as platinum are often used. Hence, in order for products using fuel cells to proliferate in the market, there is a need to collect MEAs from used fuel cells and collect rare metals from catalyst layers of the collected MEAs and reuse the rare metals, in terms of consideration of cost and environment.

The materials, compositions, etc., of a polymer electrolyte membrane, a fuel electrode catalyst layer, an air electrode catalyst layer, a gas diffusion layer, etc., of an MEA for use in a fuel cell vary depending on the application, performance, and specifications of the fuel cell. For example, in a home-use cogeneration system which obtains a fuel gas from town gas, LP gas, kerosene, etc., since CO is mixed in the fuel gas, an alloy of ruthenium and platinum that can selectively oxidize and remove CO and that has resistance to CO poisoning is used in a catalyst layer of a fuel electrode.

On the other hand, in a fuel cell stack for vehicles in which pure hydrogen containing no CO is used as a fuel gas, only pure platinum is used for a catalyst layer of a fuel electrode. For a catalyst layer of an air electrode, pure platinum, an alloy of platinum and cobalt, an alloy of platinum, cobalt, and nickel, or the like, is used according to the required performance.
As a material of a polymer electrolyte membrane of an MEA, a fluoropolymer-based ion-exchange membrane, a hydrocarbon resin-based ion-exchange membrane, or the like, is used according to the application, etc., of a fuel cell.

Accordingly, MEAs composed of a variety of different materials are to be distributed in the market. However, generally, polymer electrolyte membranes of MEAs all look substantially the same from their appearances even if the materials thereof are different. Thus, it is difficult to determine, just by a look, what a polymer electrolyte membrane is based on (e.g., fluoropolymer-based or hydrocarbon resin-based). In addition, since a catalyst layer is disposed under a gas diffusion layer, it is difficult to determine a composition of the catalyst layer. Furthermore, even if the gas diffusion layer is peeled off, it is difficult to determine a composition of the catalyst layer from the appearance of the catalyst layer.

When rare metals are collected from catalyst layers of MEAs, if compositions of polymer electrolyte membranes, catalyst layers, etc., can be easily determined, then an optimal collection process can be used for MEA recycling, whereby collection efficiency can be improved and cost required for collection can be reduced.

Conventionally, to facilitate determination of compositions of constituent members (an MEA, separators, etc.) of a fuel cell, there has been a fuel cell in which a separator has a unique information indicating section that indicates unique information about the fuel cell (see, for example, Patent Document 1).

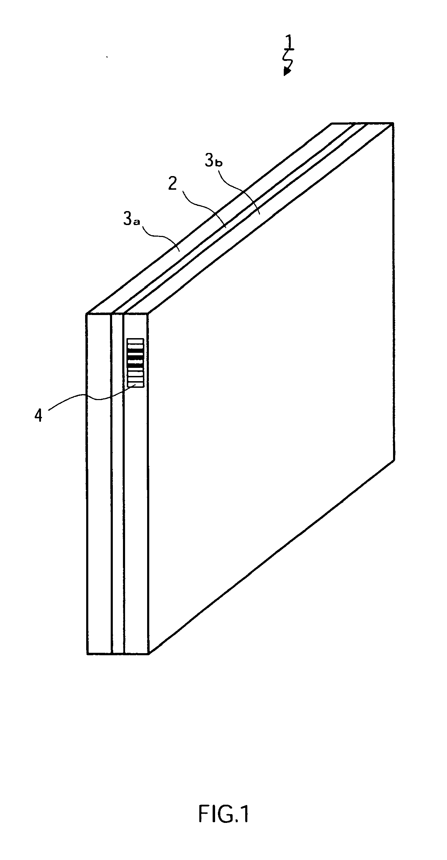

FIG.1 shows a conventional fuel cell described in Patent Document 1.
Fuel cell 1 in FIG.1 is composed of MEA 2 and separators 3a and 3b which hold MEA 2 between them. Unique information indicating section 4 is fixed on separator 3b. By reading unique information indicated by unique information indicating section 4, unique information about fuel cell 1 can be obtained.

Meanwhile, the recycling of fuel cells normally includes: 1) a step of separating a fuel cell stack into individual fuel cells and further separating each fuel cell into separators and an MEA; and 2) a step of collecting a rare metal from each MEA. The steps 1) and 2) are normally performed separately in terms of time and space (see, for example, Patent Document 2).

In addition, there are known techniques of attaching an RF tag to each fuel cell in order to check the running conditions of each fuel cell in a fuel cell stack (see, for example, Patent Documents 3 and 4). In a technique described in Patent Document 3, an RF tag is electrically connected to an electrode in order to detect a cell voltage.
Patent Document 1: Japanese Patent Application Laid-Open No.2003-115319
Patent Document 2: Japanese Patent Application Laid-Open No.2006-207003
Patent Document 3: Japanese Patent Application National Publication No.2007-5 15050
Patent Document 4: U.S. Patent Application Publication No.2005/013630
JP-A-2007179809 relates to a membrane electrode for a solid polymer electrolyte fuel cell, being formed by jointing a catalyst layer for an anode on one face of the polymer electrolyte membrane and a catalyst layer for a cathode on the opposite face. A unique information section provided with dots consisting of electrode catalyst material is present on the edge of the polymer electrolyze membrane, which is not coated by the electrode catalyst layer.
WO-A-2004/091024 discloses a catalyst-coated membrane for use in n electrochemical cell, comprising an ionomer membrane coated with catalyst layers on both sides of the membrane surface and two components, one attached to the front surface and one attached to the back surface of said catalyst-coated membrane, wherein the two components have different colors.
US-A-2006/0127716 relates to a membrane electrode assembly comprising a catalysed polymer electrolyte membrane sandwiched between two gas-diffusion layers.
EP-A-1643577 relates to a fuel cell assembly comprising a diffusion layer which comprises an electroconductive film integrally formed with a separator.
US-A-2002/0192537 discloses a versatile layer component that is substantially metallic, and which can be designed to perform the function of either a diffusion layer or a diffusion layer combined with a flow field plate, in a direct oxidation fuel cell.
WO-A-2008/050611 discloses a membrane for a fuel cell, the membrane comprising:
opposite surfaces: and
an identifier exhibiting an identifying property and being disposed in at least a part of one of the opposite surfaces.
US-A-2008/0063918 relates to a fuel cell component including a body having a surface, and an identification information display portion provided on the body. The identification information display portion is provided at a recessed region of the body recessed relative to the surface.

### Problems to be Solved by the Invention

However, in a fuel cell such as that shown in FIG. 1, since information about an MEA is indicated by a unique information indicating section which is disposed only on a separator, when the fuel cell is separated into separators and an MEA and only the MEA is collected, a composition of the MEA, etc., cannot be determined.

In addition, since the lifespan of fuel cells is about 10 years, there is a long period from when fuel cells are shipped to when the fuel cells become unusable and thus are collected for recycling. Therefore, the fuel cells are to start up and shut down repeatedly (about several thousands to several tens of thousands of times) over a long period of time. The temperature of the fuel cells (separators) goes up to 60°C to 90°C upon power generation and goes down to room temperature upon shut down. Hence, in a fuel cell of the above-described configuration, since a unique information indicating section (particularly, a barcode or an IC chip) disposed on a separator is to be subjected to temperature change over a long period of time and numbers of times, the unique information indicating section deteriorates, causing a problem that unique information indicated by the unique information indicating section cannot be read.

It is an object of the present invention to provide a method for recycling fuel cells which comprise MEA whose unique information can be obtained even when the MEA is collected alone and to provide an MEA having a unique information section that does not deteriorate even after a long time of use. Means for Solving the Problems

The present invention is directed to a method of recycling fuel cells as defined in claims 1 and 2.

### Advantageous Effects of Invention

According to MEAs employed in the method of the present invention, even when a fuel cell is separated into separators and an MEA and the MEA is collected alone, unique information about the MEA can be easily obtained by means of a unique information section of the MEA. Hence, MEAs can be recycled with an optimal recycling process and thus the collection efficiency of rare metals contained in the MEAs can be increased and collection cost can be reduced.

FIG.1 is a perspective view of a conventional fuel cell;
FIG.2A to FIG. 2F are diagrams showing examples of a unique information section of the present invention;
FIG.3 is a diagram showing a flow of a method of recycling fuel cells of the present invention;
FIG. 4 is a perspective view of a fuel cell including an MEA of Embodiment 1;
FIG. 5 is a front view of the fuel cell including the MEA of Embodiment 1;
FIG. 6 is an exploded cross-sectional view of the fuel cell including the MEA of Embodiment 1;
FIG.7 is a front view of a fuel electrode gas diffusion layer of the MEA of Embodiment 1;
FIG.8 is a front view of a fuel electrode gas diffusion layer of an MEA of Embodiment 2;
FIG. 9 is a front view of a fuel cell including an MEA of Embodiment 3;
FIG. 10 is an exploded perspective view of the MEA of Embodiment 3;
FIG. 11 is an exploded cross-sectional view of the fuel cell including the MEA of Embodiment 3;
FIG. 12 is a cross-sectional view of the fuel cell including the MEA of Embodiment 3;
FIG.13 is a front view of a fuel cell including an MEA of Embodiment 4;
FIG.14 is an exploded perspective view of the MEA of Embodiment 4;
FIG. 15 is an exploded cross-sectional view of the fuel cell including the MEA of Embodiment 4;
FIG.16 is a cross-sectional view of the fuel cell including the MEA of Embodiment 4;
FIG.17 is a cross-sectional view of an MEA of Embodiment 5;
FIG.18 is a cross-sectional view of an MEA of Embodiment 6;
FIG.19 is a cross-sectional view of an MEA of Embodiment 7;
FIG. 20 is a cross-sectional view of an MEA of Embodiment 8;
FIG.21 is a perspective view of a fuel cell including an MEA of Embodiment 9;
FIG.22 is a front view of the MEA of Embodiment 9;
FIG.23 is a cross-sectional view of the MEA of Embodiment 9;
FIG.24 is a perspective view of a fuel cell including an MEA of Embodiment 10;
FIG. 25A is a front view of an MEA of Embodiment 11;
FIG. 25B is a cross-sectional view of an MEA of Embodiment 11;
FIG. 26A is a front view of an MEA of Embodiment 12;
FIG. 26B is a cross-sectional view of an MEA of Embodiment 12;
FIG.27A is an exploded perspective view of a fuel cell including an MEA of Embodiment 13;
FIG. 27B is an enlarged cross-sectional view of a fuel cell including an MEA of Embodiment 13;
FIG.28A is an exploded perspective view of a fuel cell including an MEA of Embodiment 14; and
FIG. 28B is an enlarged cross-sectional view of a fuel cell including an MEA of Embodiment 14.

### Best Mode for Carrying Out the Invention

A fuel cell(s) employed in the method of the present invention may be a single fuel cell or may be a fuel cell stack having a plurality of fuel cells stacked together. Normally, a fuel cell stack is held by current collector plates, insulating plates, and end plates, and is further secured by an engaging rod.

A fuel cell includes a membrane electrode assembly (hereinafter, also referred to as an "MEA") and separators which hold the MEA between them. The present invention is characterized in that the MEA has a unique information section. In the unique information section, unique information about the MEA is recorded. The present invention is characterized by content of the unique information and a disposition location of the unique information section. The MEA, the unique information section, and the disposition location of the unique information section will be described below.

### [For the MEA]

An MEA has a polymer electrolyte membrane and a pair of catalyst electrodes including a fuel electrode and an air electrode which hold the polymer electrolyte membrane between them. It is preferred that each catalyst electrode have a catalyst layer which is in contact with the polymer electrolyte membrane; and a gas diffusion layer which is stacked on the catalyst layer.

The polymer electrolyte membrane is a polymer membrane having the function of selectively transporting protons in a wet state. A material of the polymer electrolyte membrane is not particularly limited as long as the material can selectively transport hydrogen ions. Examples of such a material include a fluorine-based polymer electrolyte membrane and a hydrocarbon-based polymer electrolyte membrane. Specific examples of the fluorine-based polymer electrolyte membrane include a Nafion membrane produced by DuPont, a Flemion membrane produced by Asahi Glass Co., Ltd., an Aciplex membrane produced by Asahi Kasei Corporation, and a GORE-SELECT membrane produced by Japan Gore-Tex Inc.

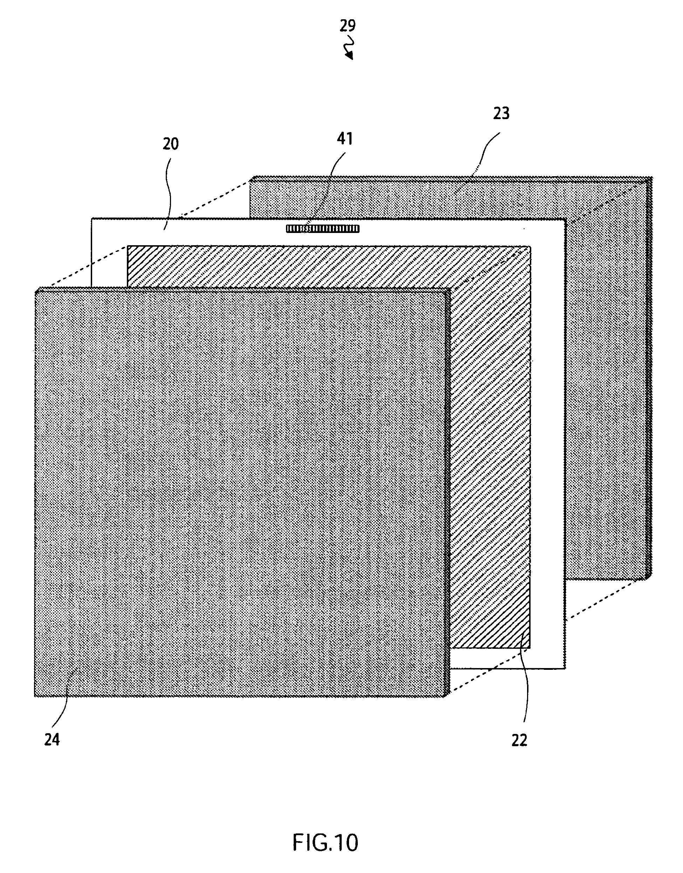

The area of the polymer electrolyte membrane is generally designed to be larger than the areas of the catalyst electrodes. Therefore, a part of the polymer electrolyte membrane held between the catalyst electrodes protrudes from the catalyst electrodes in a plane direction of the polymer electrolyte membrane and thus is exposed to outside (see FIG.10). Since a part of the polymer electrolyte membrane protrudes form the catalyst electrodes and is exposed to outside, the catalyst electrodes are prevented from being short-circuited to each other.

Each catalyst layer is a layer containing a catalyst that promotes redox reactions of hydrogen or oxygen. The catalyst layers are not particularly limited as long as the catalyst layers have conductivity and the catalyst function of promoting redox reactions of hydrogen and oxygen. A catalyst layer of the air electrode side includes, as a catalyst, for example, platinum, an alloy of platinum and cobalt, or an alloy of platinum, cobalt, and nickel. A catalyst layer of the fuel electrode side includes, as a catalyst, platinum, an alloy of platinum and ruthenium, or the like.

A catalyst layer is formed by, for example, mixing an electrolyte having proton conductivity and a resin having water repellency, such as PTFE, in carbon particulates, such as acetylene black, ketjen black, or Vulcan, which support a catalyst such as that described above, and applying the mixture onto the polymer electrolyte membrane.

Each gas diffusion layer is a porous layer having conductivity. A material of the gas diffusion layers is not particularly limited as long as the material has conductivity and can diffuse reactant gas. Each gas diffusion layer may be composed of a gas diffusion base layer that diffuses gas supplied from the separator side into a catalyst layer; and a carbon coating layer that improves the adhesion between the gas diffusion base layer and the catalyst layer. Furthermore, each gas diffusion layer may have any member. For example, a gas diffusion layer may have a gas-permeable protective membrane, etc., on a surface of a gas diffusion base layer that is in contact with a separator.

A gas diffusion layer may be fabricated by, for example, crimping carbon fibers with a resin having water repellency, such as PTFE, attached thereto, a carbon cloth fabricated by weaving a thread-like carbon, a paper-like carbon, etc., onto a surface of a catalyst layer.

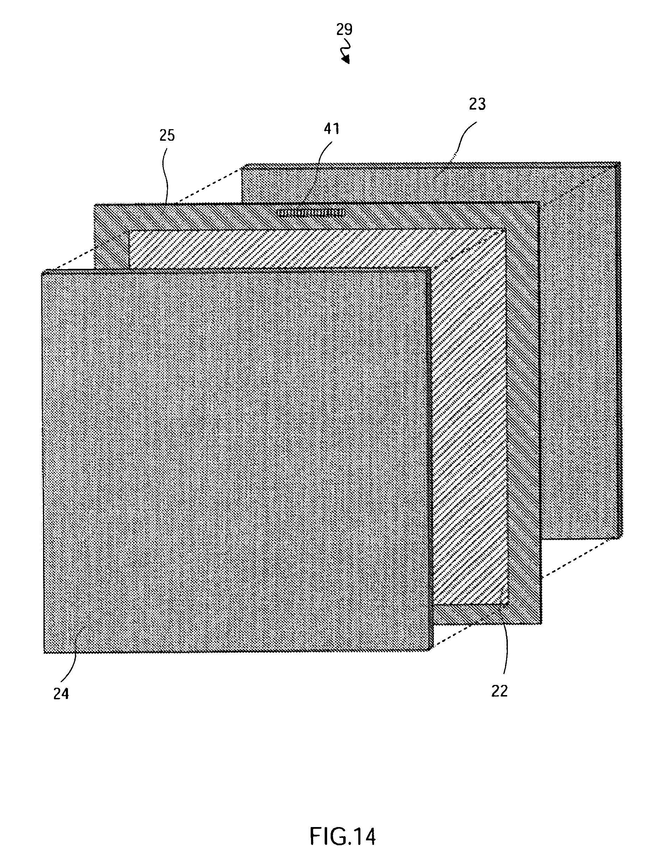

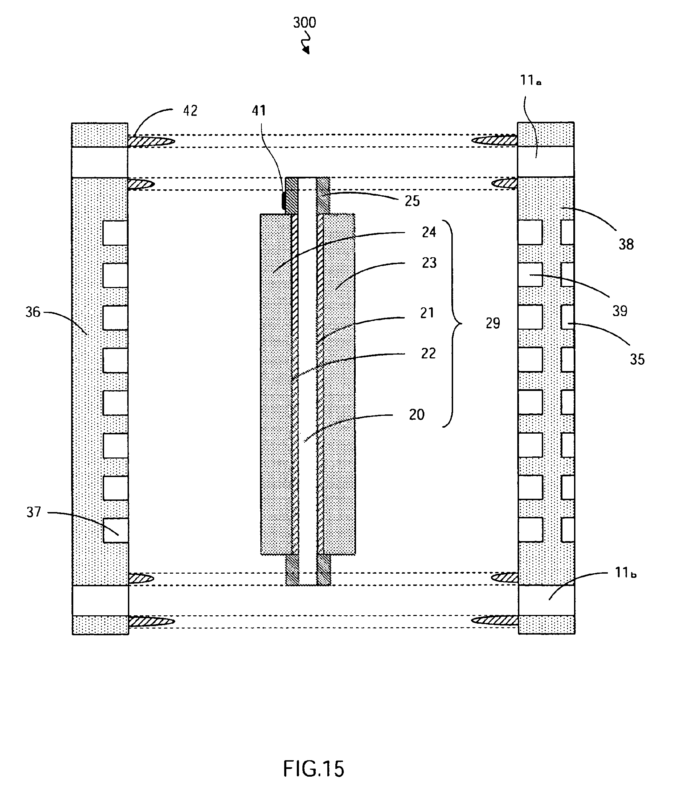

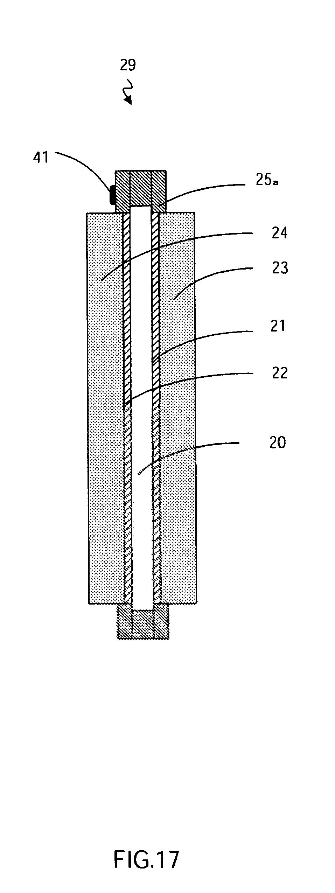

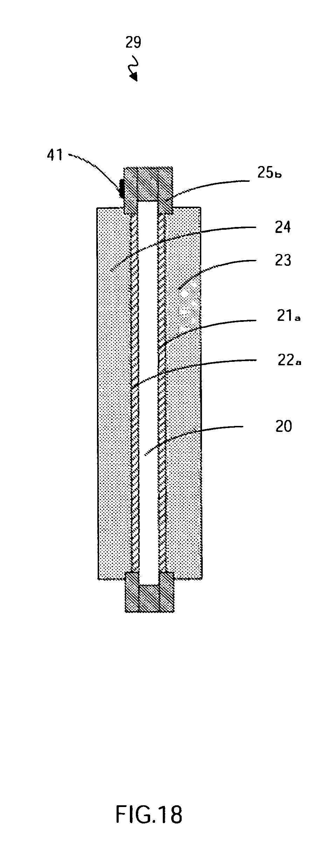

The MEA may further have an electrolyte membrane reinforcing member. The electrolyte membrane reinforcing member is a member for maintaining the form of the polymer electrolyte membrane so as to prevent the polymer electrolyte membrane from beis innding. The electrolyte membrane reinforcing member is in contact with the polymer electrolyte membrane and is not covered by the catalyst electrodes (see FIG.14). For example, the electrolyte membrane reinforcing member is disposed in the entire periphery of the polymer electrolyte membrane (see FIGS. 15 to 18) or is disposed in the entire periphery of the polymer electrolyte membrane and covers an entire circumference of the polymer electrolyte membrane (see FIGS.17 and 18) or covers an entire circumference of the polymer electrolyte membrane (see FIGS.17 to 20), and thereby comes into contact with the polymer electrolyte membrane and maintains the form of the polymer electrolyte membrane. To increase the adhesion between the polymer electrolyte membrane and the electrolyte membrane reinforcing member, it is preferred that the electrolyte membrane reinforcing member be disposed on the periphery of the polymer electrolyte membrane (see FIGS.15 to 18).

A material of the electrolyte membrane reinforcing member is not particularly limited as long as the material is insulative. In addition, since the polymer electrolyte membrane becomes high-temperature and acidic (pH1 to pH2) upon power generation of the fuel cell, it is preferred that a material of the electrolyte membrane reinforcing member have heat resistance and acid resistance. Examples of such a material of the electrolyte membrane reinforcing member include polypropylene, polyphenylene sulfide, and liquid crystal polymer.

The electrolyte membrane reinforcing member may be, for example, a film containing the above-described member, laminated on a polymer electrolyte. The lamination is performed, for example, by thermocompression.

By the electrolyte membrane reinforcing member reinforcing the polymer electrolyte membrane, the form of the polymer electrolyte membrane is maintained and furthermore the form of the MEA is maintained to improve handling of the MEA.

The MEA may further have a frame body section. The frame body section is a member for holding the polymer electrolyte membrane and the catalyst electrodes. The frame body section accommodates the polymer electrolyte membrane and the catalyst electrodes such that the catalyst electrodes can come into contact with the respective separators. An MEA having a frame body section is also hereinafter referred to as a "frame body-integrated MEA".

The frame body section is made of an insulative member with low thermal conductivity. In addition, the frame body section preferably has heat resistance and acid resistance and is normally of a resin. Examples of a material of such a frame body section include polypropylene, polyphenylene sulfide, and polypropylene glycol.

The frame body section has a coolant entry manifold for supplying a coolant and a coolant outlet manifold for discharging a coolant. In addition, in the frame body section, a manifold for supplying and exhausting a fuel gas and a manifold for supplying and exhausting an oxide gas are formed. Furthermore, a rubber-like sealing section for sealing a coolant, an oxide gas, a fuel gas, etc., may be formed in the frame body section.

The frame body section may be formed by 1) preparing a mold having a cavity having the shape of the frame body section; and 2) filling the cavity of the mold with a material of the frame body section such as that described above, and cooling the material for solidification.

The MEA of the present invention is held between a pair of separators (a fuel electrode separator and an air electrode separator) to produce a fuel cell.

The separators are conductive plates having fuel gas channels on a surface thereof that comes into contact with the fuel electrode, and having oxide gas channels on a surface thereof that comes into contact with the air electrode. Examples of a material of the separators include carbon and metal. A surface of a separator having gas channels has concave sections and convex sections and the concave sections form the gas channels.
Each separator has a coolant entry manifold for supplying a coolant and a coolant outlet manifold for discharging a coolant. In addition, each separator has a manifold for supplying and exhausting a fuel gas and a manifold for supplying and exhausting an oxide gas. Furthermore, each separator may have a rubber-like sealing section that prevents a coolant, an oxide gas, a fuel gas, etc., from leaking.

In addition, fuel cells thus configured may be stacked together to produce a fuel cell stack. Normally, a fuel cell or a stack is held by current collector plates, insulating plates, and end plates, and is further secured by an engaging rod.

### [Unique information section]

As described above, an MEA of the present invention has a unique information section. In the unique information section, unique information about the MEA is recorded. The unique information about the MEA includes information about the catalyst compositions of catalyst electrodes. Specifically, the unique information includes platinum content of the fuel electrode and the air electrode. The unique information may further include information about the compositions and amounts of electrolytes, water repellents, etc., contained in the catalyst layers, the composition and amount of an electrolyte contained in a polymer electrolyte membrane, etc.

Since such information is recorded in the unique information section of the MEA, even when the MEA and separators are separated in a recycling process and collected separately, unique information about the MEA which is required for recycling can be obtained from the unique information section of the MEA.

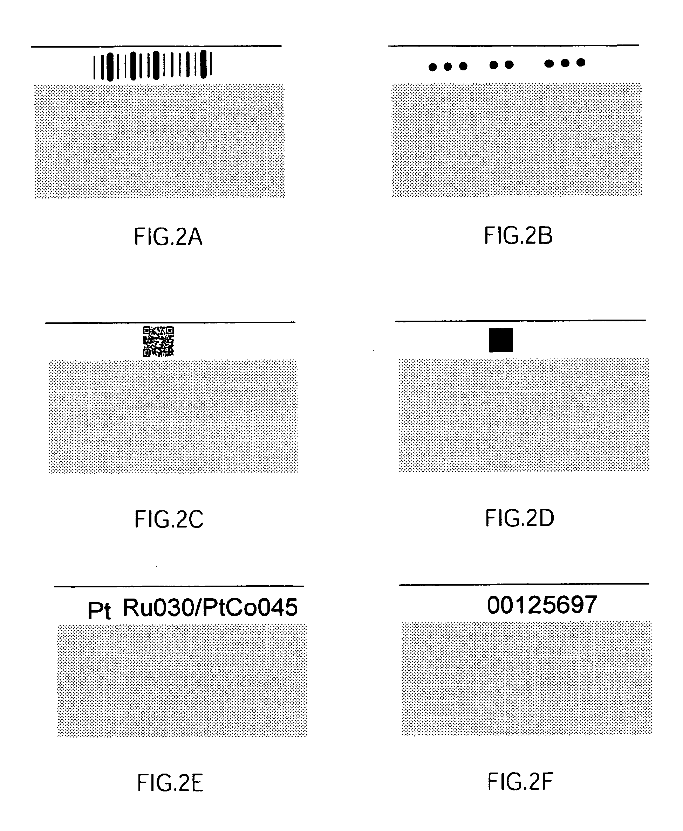

The unique information section is not particularly limited as long as unique information can be recorded in. FIG.2A to FIG 2B show specific examples of the unique information section. As shown in FIG.2, examples of the unique information section include a one-dimensional code such as a barcode (see FIG.2A), dots (see FIG.2B), a two-dimensional code such as a QR code (see FIG.2C), an IC chip (see FIG.2D), and character strings including numbers and letters (see FIGS.2E and 2F). When the unique information section is a one-dimensional code, dots, a two-dimensional code, or a character string, the unique information section may be a bonded printed matter or may be a printed section which is directly printed on an MEA or may consist of a surface feature of an MEA. On the other hand, when the unique information section is an IC chip, the unique information section is bonded onto an MEA.

Methods of forming a surface feature of an MEA include one in which a laser ablation process is performed on an MEA, etc. A surface feature of an MEA formed by laser ablation process may configure the unique information section.

To bond a unique information section onto an MEA, an adhesive may be used. The adhesive is preferably one having heat resistance. Examples of such an adhesive include adhesives containing, as a main component, a silicon resin or a denatured silicon resin (silicon adhesives available from ThreeBond Co., Ltd., Cemedine Co., Ltd., Shin-Etsu Chemical Co., Ltd., etc.). By using a heat-resistant adhesive, a unique information section bonded onto an MEA is prevented from being peeled off by heat upon power generation of a fuel cell.

When a unique information section is directly printed on an MEA, an ink used for printing preferably has heat resistance. Examples of such an ink include an ink containing a resin binder, etc. By using a heat-resistant ink, a unique information section of an MEA is prevented from melting by heat upon power generation of a fuel cell.

### [Disposition location of the unique information section]

A unique information section may be deteriorated by heat upon power generation or temperature change. For example, when a unique information section is bonded onto an MEA with an adhesive, the unique information section may be peeled off by heat upon power generation of a fuel cell or the unique information section may be deteriorated by heat and accordingly unique information may be unable to be read. When a unique information section consists of a surface feature of an MEA, a pattern formed in the surface of MEA may be deformed by heat and accordingly unique information may be unable to be read.

Therefore, it is preferred that a unique information section be disposed in an area on an MEA where the temperature change is small. The area of a fuel cell where the temperature change is small is, for example, a region of an MEA near a coolant entry manifold for when the MEA is held between separators, or an area exposed to outside when fuel cells are stacked together to produce a fuel cell stack. The coolant entry manifold is a pipe for supplying a coolant for cooling a fuel cell. Therefore, in a region near the coolant entry manifold, the temperature is lowest upon power generation of the fuel cell. Hence, the region of the MEA near the coolant entry manifold is an area of the MEA where the temperature change is smallest.

As used herein, the term " a region of the MEA near the coolant entry manifold" corresponds to the coolant entry manifold side-half of the MEA. That is, when a unique information section is disposed near the coolant entry manifold, the distance between the unique information section and the coolant entry manifold is smaller than the distance between the unique information section and the coolant outlet manifold. Specifically, the distance between the unique information section and the coolant entry manifold is preferably 50 mm or less and more preferably 30 mm or less.

By disposing a unique information section in an area where the temperature change is small, deterioration of the unique information section which is caused by temperature change brought about by the start-up and shut-down of a fuel cell over a long period of time can be reduced. Therefore, even after a fuel cell has been used for a long period of time, unique information about an MEA which is recorded in a unique information section cannot be lost.

In addition, in order to prevent a unique information section from being deteriorated by a contact pressure applied by separators when a MEA of the present invention is held between the separators or to prevent the unique information section from being deteriorated by heat from the separators upon power generation of a fuel cell, it is preferred that the unique information section be distanced from the separators.

A unique information section may be disposed on a gas diffusion layer (see Embodiments 1 and 2) or may be disposed on a polymer electrolyte membrane (see Embodiment 3) or may be disposed on an electrolyte membrane reinforcing section (see Embodiments 4 to 8) or may be disposed on a frame body section (see Embodiments 9 to 14).

When a unique information section is disposed on a gas diffusion layer, the unique information section may be disposed on a fuel electrode gas diffusion layer or may be disposed on an air electrode gas diffusion layer but is preferably disposed on the fuel electrode gas diffusion layer. When a unique information section is disposed on the air electrode gas diffusion layer, the unique information section may deteriorate due to an oxide gas supplied to the air electrode gas diffusion layer. A reference potential of the fuel electrode (a reference potential of hydrogen which is a fuel gas) is 0 V. Thus, by disposing a unique information section on the fuel electrode gas diffusion layer, deterioration of the unique information section caused by potential can be prevented.

It is preferred that a material of a gas diffusion layer be appropriately selected according to a member of a unique information section. For example, when a unique information section is bonded onto a gas diffusion layer, a material of the gas diffusion layer is preferably a carbon cloth, a carbon paper, a carbon sheet, etc.
On the other hand, when a unique information section consists of a surface feature of a gas diffusion layer, a material of the gas diffusion layer is preferably a carbon sheet.

To bond a unique information section onto a gas diffusion layer, the unique information section may be bonded to an area of the gas diffusion layer where pretreatment is performed. Examples of the pretreatment of the gas diffusion layer include provision of a protective membrane on the gas diffusion layer and shaving a gas diffusion base layer of the gas diffusion layer to flatten a surface of the gas diffusion layer.

Disposition of a unique information section on a gas diffusion layer is preferably performed after the gas diffusion layer is stacked on a catalyst layer. As described above, a gas diffusion layer is stacked on a catalyst layer by thermocompression. Thus, by disposing a unique information section after a gas diffusion layer is stacked on a catalyst layer, the unique information section is prevented from being deteriorated by heat generated upon thermocompression.

When a unique information section is disposed on a polymer electrolyte membrane, the unique information section is disposed in the part of the polymer electrolyte membrane that protrudes from catalyst electrodes (see FIG.10). When a unique information section is disposed on a polymer electrolyte membrane, it is preferred that the unique information section have acid resistance. By using an acid-resistant unique information section, deterioration of the unique information section is reduced. This is because the polymer electrolyte membrane becomes acidic (pH1 to pH2) upon power generation of a fuel cell. To make the unique information section acid-resistant, for example, the unique information section is covered or coated with an acid-resistant material. Examples of such a material include PEN (polyethylene naphthalate), PET (polyester), PP (polypropylene), and PI (polyimide).

When a unique information section is bonded onto a polymer electrolyte membrane, the unique information section may be directly bonded onto the polymer electrolyte membrane or may be bonded to an area of the polymer electrolyte membrane where pretreatment is performed. Examples of the pretreatment of the polymer electrolyte membrane include provision of a water-repellent protective membrane on the polymer electrolyte membrane and provision of an acid-resistant protective membrane, etc., on the polymer electrolyte membrane. An adhesive that bonds the unique information section is preferably one having acid resistance in addition to heat resistance. By using an acid-resistant adhesive, deterioration of the unique information section bonded onto the polymer electrolyte membrane is reduced.

In addition, when a unique information section is disposed on a polymer electrolyte membrane, it is preferred that the unique information section be disposed in an area away from catalyst electrodes. By disposing a unique information section in an area away from the catalyst electrodes, deterioration of the unique information section due to the potentials of the catalyst electrodes is reduced. In addition, since the catalyst electrodes are subjected to high temperatures and high humidity upon power generation of a fuel cell, by disposing a unique information section in an area away from the catalyst electrodes, deterioration of the unique information section due to high temperatures and high humidity is reduced.

When a unique information section is directly printed on a polymer electrolyte membrane, an ink used for printing preferably has acid resistance in addition to heat resistance. By using an acid-resistant ink, deterioration of the unique information section printed on the polymer electrolyte membrane is reduced.

When a unique information section is disposed on an electrolyte membrane reinforcing member, disposition of the unique information section is preferably performed after gas diffusion layers are respectively stacked on catalyst layers. As described above, a gas diffusion layer is stacked on a catalyst layer by thermocompression. Therefore, by disposing a unique information section after stacking gas diffusion layers, the unique information section is prevented from being deteriorated by heat generated upon thermocompression.

In addition, when a unique information section is disposed on an electrolyte membrane reinforcing member, it is preferred that the unique information section be disposed in an area away from catalyst electrodes which are stacked on a polymer electrolyte membrane. By disposing a unique information section in an area away from the catalyst electrodes, deterioration of the unique information section due to the potentials of the catalyst electrodes is reduced. In addition, since the catalyst electrodes are subjected to high temperatures and high humidity upon power generation of a fuel cell, by disposing a unique information section in an area away from the catalyst electrodes, deterioration of the unique information section due to high temperatures and high humidity is reduced.

When a unique information section is disposed on a frame body section, a transfer pattern of a one-dimensional code, dots, a two-dimensional code, or a character string may be formed in advance in a mold having a cavity for the frame body section. It is thus possible to form a unique information section at the same time as the formation of a frame body section.

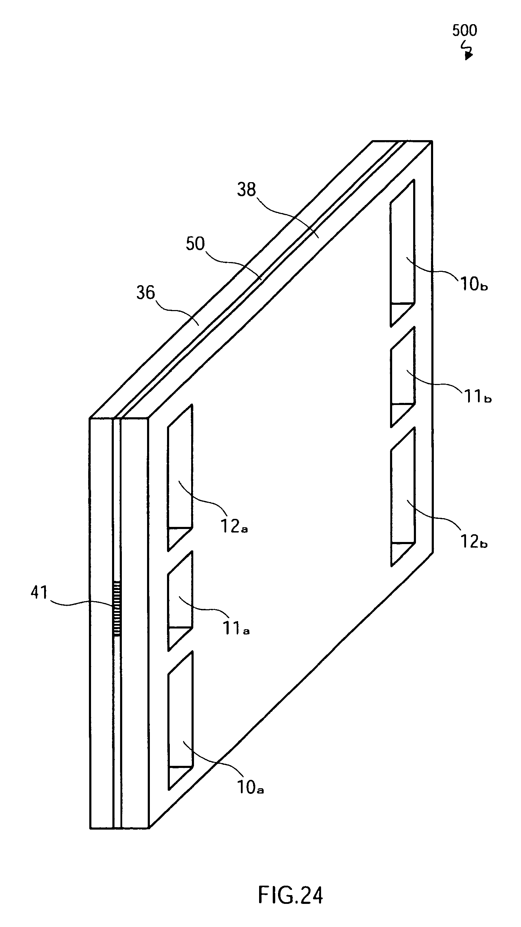

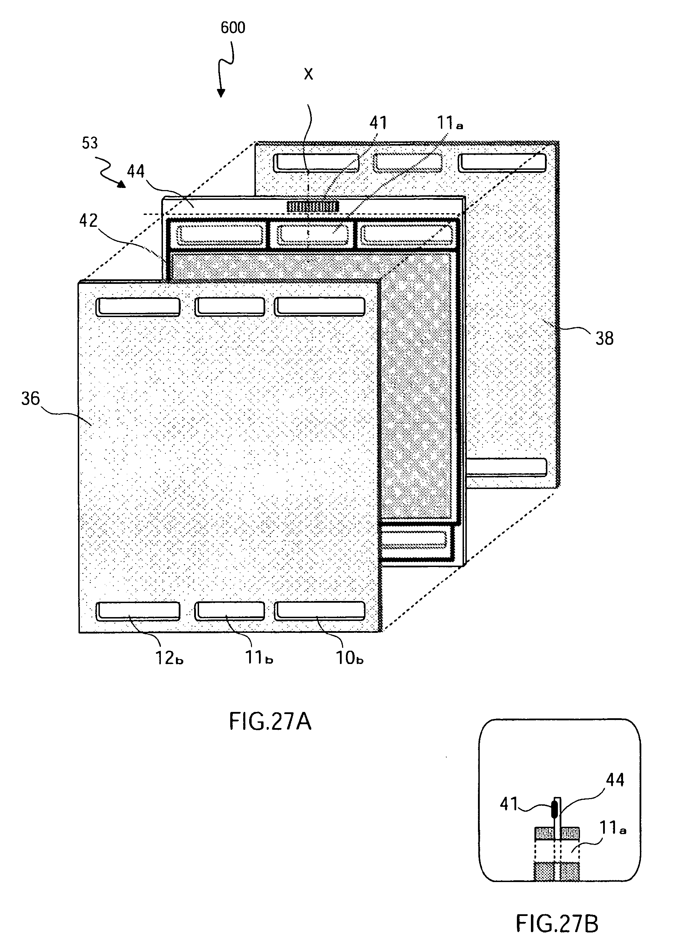

In addition, when a unique information section is disposed on a frame body section, the unique information section may be disposed in an area of a fuel cell stack exposed to outside. The term "area of a fuel cell stack exposed to outside" indicates, for example, a surface of a frame body section that does not come into contact with separators (see Embodiment 10 and FIG.24) or a protruding-area of a frame body section (see Embodiment 13 and FIG.27).

Next, exemplary production of a fuel cell of the present invention will be described.
A fuel cell of the present invention is produced by holding an MEA of the present invention between separators. In addition, fuel cells thus produced may be stacked together to configure a fuel cell stack. The number of fuel cells stacked together is appropriately selected according to the required output. When the required output is large, the number of fuel cells stacked together is increased. A predetermined engagement pressure is applied to stacked fuel cells by current collector plates and end plates, whereby the fuel cells are engaged and secured.

When an MEA is held between separators, an appropriate MEA needs to be selected. In the present invention, since an MEA has a unique information section, unique information about the MEA can be easily read by a reader, etc., upon assembling a fuel cell. Hence, the risk of selecting a wrong MEA upon assembling a fuel cell is reduced and accordingly a production failure caused by the selection of a wrong MEA can be prevented.

In addition, by disposing a unique information section on the air electrode side or the fuel electrode side of an MEA, the unique information section can also serve as a mark that indicates an electrode. Thus, the risk of selecting a wrong electrode plane upon assembling a fuel cell is reduced and accordingly a production failure caused by the selection of a wrong electrode plane can be prevented. Hence, stabilization of the performance and quality of a fuel cell stack is achieved.

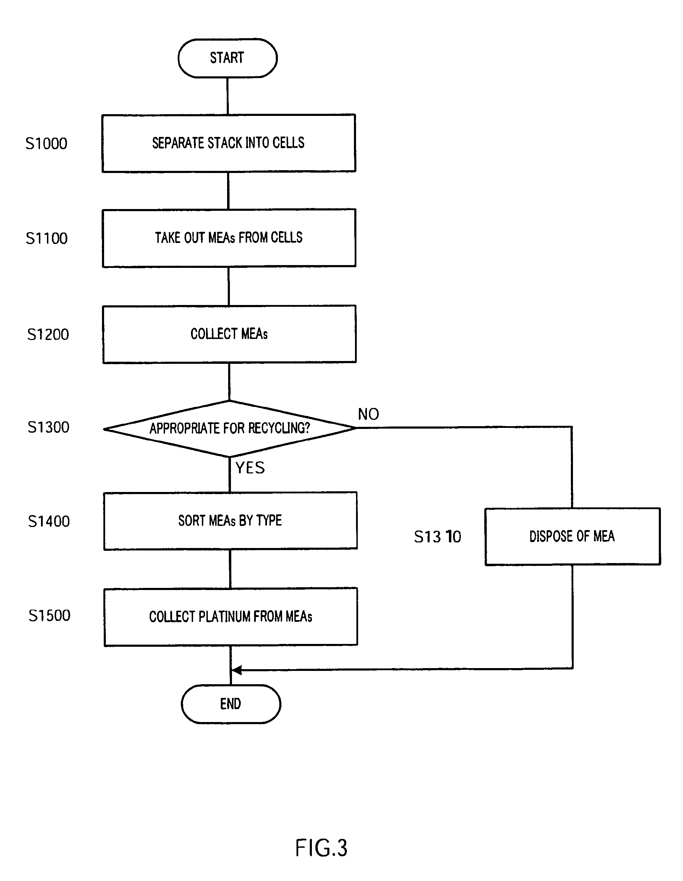

Next, an example of a recycling process of fuel cells of the present invention will be described with reference to the flowchart shown in FIG.3. FIG.3 shows the flowchart showing a recycling process of fuel cells.

First, at step S1000, a fuel cell stack is separated into individual fuel cells. The fuel cell stack may be one that is ejected from a fuel cell cogeneration system or a fuel cell-powered vehicle, etc. To take out fuel cells from a fuel cell stack, metals and resins that engage and secure the stacked fuel cells are removed. The process may proceed to another step in which the removed metals and resins are recycled.

Then, at step S1100, MEAs are taken out of the fuel cells.
To take out an MEA from a fuel cell, separators are removed from the fuel cell. The separators are composed of metal or carbon. The process may proceed to another step in which the removed separators are recycled.

Then, at step S1200, the taken-out MEAs are collected.
Steps S1000 and S1100 are mechanically performed; on the other hand, a step of collecting rare metals from the MEAs is normally performed chemically wherein rare metals are dissolved and collected from catalyst layers. Therefore, in terms of cost and efficiency, a batch process is performed. Namely, MEAs are collected and gathered once at step S1200 and are then sorted.

Then, at step S1300, a determination as to whether recycling is appropriate is made with reference to the unique information about an MEA. A determination as to whether recycling is appropriate is made based on the unique information about an MEA which is recorded in a unique information section. Examples of a means of reading the unique information from the unique information section include a barcode reader, a two-dimensional code reader, an IC chip reader, and recognition by the naked eye. A barcode reader, a two-dimensional code reader, etc., may be hand-held scanners or fixed scanners.

In the present invention, since an MEA has a unique information section, unique information about the MEA can be easily read even only from the MEA. In addition, since a unique information section in the present invention is disposed in an area of an MEA where the temperature change is small, deterioration of the unique information section is small. Therefore, even when a long period of time has elapsed since the start of use, unique information can be read from the unique information section.

Here, the case in which recycling is not appropriate indicates not only the case in which a rare metal (particularly, platinum) is not used in an MEA but also the case in which recycling is not worth the cost. The recycling is not worth the cost, for example, in the case even if a rare metal is used, the amount of the rare metal used is significantly small or collection is difficult, or the like. For example, when the content of platinum in catalyst layers of an MEA is high, it is determined that the MEA is appropriate for recycling. On the other hand, when the platinum content of catalyst layers is low or a catalyst contained in catalyst layers of an MEA is, for example, a cheap Fe (iron)-based catalyst, it is determined that the MEA is not appropriate for recycling.

An MEA which is determined at step S1300 to be not appropriate for recycling is discarded at step S1310 and the flow ends. On the other hand, an MEA which is determined at step S1300 to be appropriate for recycling is sorted in step S1400.

At step S1400, MEAs which are determined to be appropriate for recycling are further sorted by the type of MEA and the sorted MEAs are collected. Sorting of MEAs is performed based on unique information about the MEAs which are recorded in respective unique information sections.
MEAs are sorted, for example, by the type of rare metal which is a catalyst used in a fuel electrode or an air electrode or by weight density.

Then, at step S1500, platinum is collected from catalyst layers of the MEAs and the flow ends. Examples of a method of collecting platinum from a catalyst layer of an MEA include methods described in Japanese Patent Application Laid-Open No.63-161129, Japanese Patent Application Laid-Open No.2006-207003, Japanese Patent Application Laid-Open No.2007-083173, Japanese Patent Application Laid-Open No.2006-095367, and Japanese Patent Application Laid-Open No.2002-25581.
If polymer electrolyte membranes, gas diffusion layers, and frame body sections are recyclable, then the process may proceed to another step in which they are recycled.

Since catalysts of collected MEAs have high platinum content, the step of collecting platinum from catalyst layers of the MEAs has advantages in that collection efficiency is high and collection cost is low.

As such, according to a fuel cell of the present invention, even when separators and an MEA are disassembled and collected separately, unique information about the MEA can be easily obtained from a unique information section of the MEA. Hence, MEAs can be recycled with an optimal recycling process and thus the collection efficiency of rare metals contained in the MEAs can be increased and collection cost can be reduced.

In addition, according to a fuel cell of the present invention, deterioration of a unique information section which is caused by temperature change brought about by the start-up and shut-down of the fuel cell over a long period of time can be reduced. Hence, even after a fuel cell has been used for a long period of time, unique information about an MEA which is recorded in a unique information section will not be lost. For example, when a unique information section is formed on an MEA, the likelihood that a formed section is deformed by heat is lessened. When a unique information section is printed, the likelihood that a printed matter is deteriorated by heat is lessened. When a unique information section is an IC chip, the likelihood that the IC chip is deteriorated by heat and accordingly information recorded in the IC chip cannot be read is lessened.

Embodiments of the present invention will be described in detail below with reference to the drawings. Note, however, that the present invention is not limited to the embodiments.

Embodiments 1 and 2 describe an example in which a unique information section is disposed on a gas diffusion layer.

### (Embodiment 1)

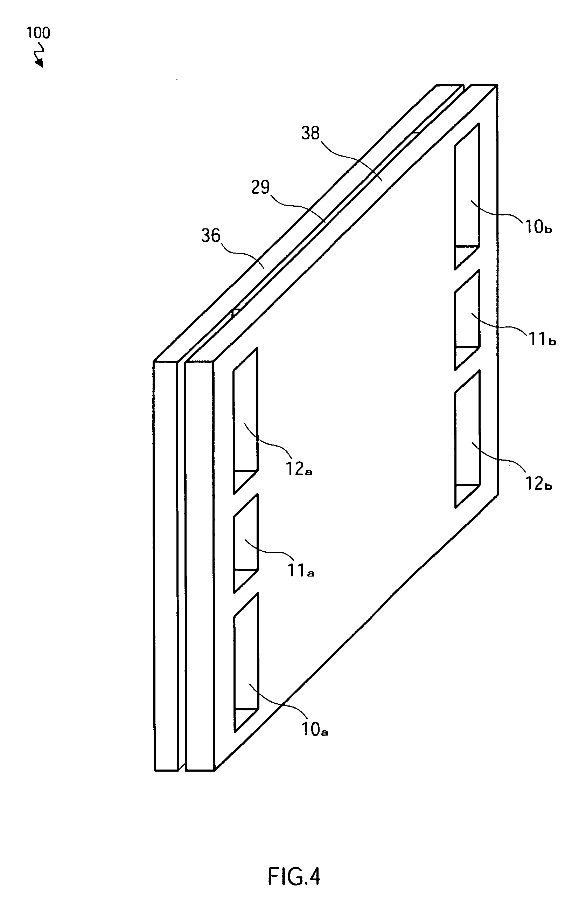

FIG.4 is a perspective view of fuel cell 100 including an MEA of Embodiment 1 of the present invention.

As shown in FIG.4, fuel cell 100 includes MEA 29 and a pair of separators (fuel electrode separator 36 and air electrode separator 38) which hold MEA 29 between them. Each of fuel electrode separator 36 and air electrode separator 38 has oxide gas entry manifold 10a, oxide gas outlet manifold 10b, fuel gas entry manifold 12a, fuel gas outlet manifold 12b, coolant entry manifold 11a, and coolant outlet manifold 11b.

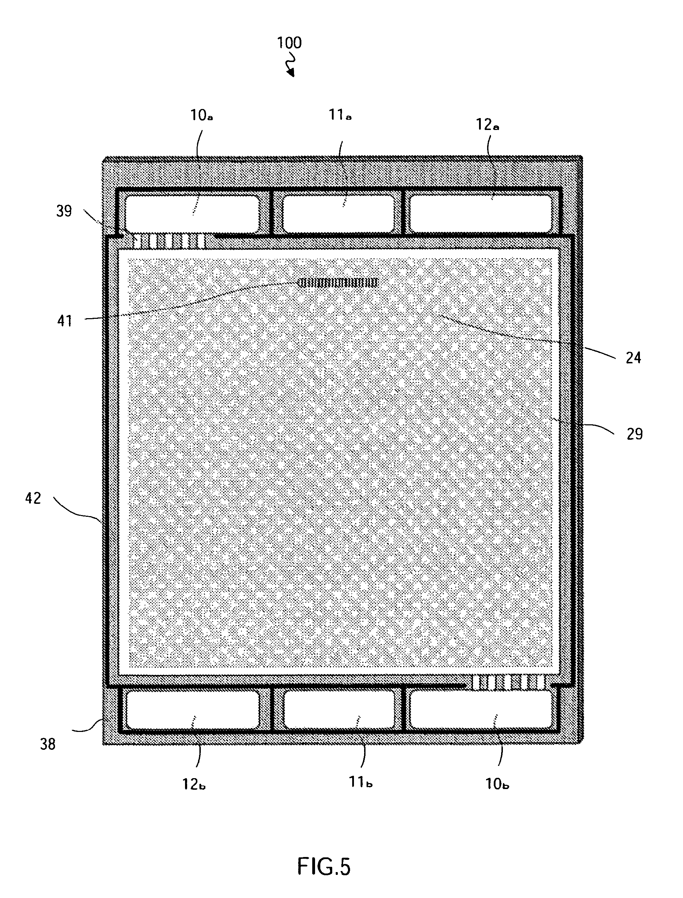

FIG.5 is a front view of fuel cell 100 where fuel electrode separator 36 is removed.

As shown in FIG.5, air electrode separator 38 has sealing section 42. In addition, unique information section 41 where unique information is recorded is disposed in a region on fuel electrode gas diffusion layer 24 near coolant entry manifold 11a.

By disposing a unique information section on a fuel electrode gas diffusion layer of an MEA, unique information about the MEA can be obtained even only from the MEA. Thus, recycling of the MEA becomes easy. In addition, since the unique information section is disposed in a region of a fuel cell near a coolant entry manifold where the temperature change is small and the temperature is low, deterioration of the unique information section caused by heat and temperature change can be reduced. Hence, even in a fuel cell having been used for a long period of time, unique information about an MEA can be read from a unique information section. In addition, by disposing a unique information section on a fuel electrode gas diffusion layer where the potential is low, the unique information section is prevented from being deteriorated by potential.

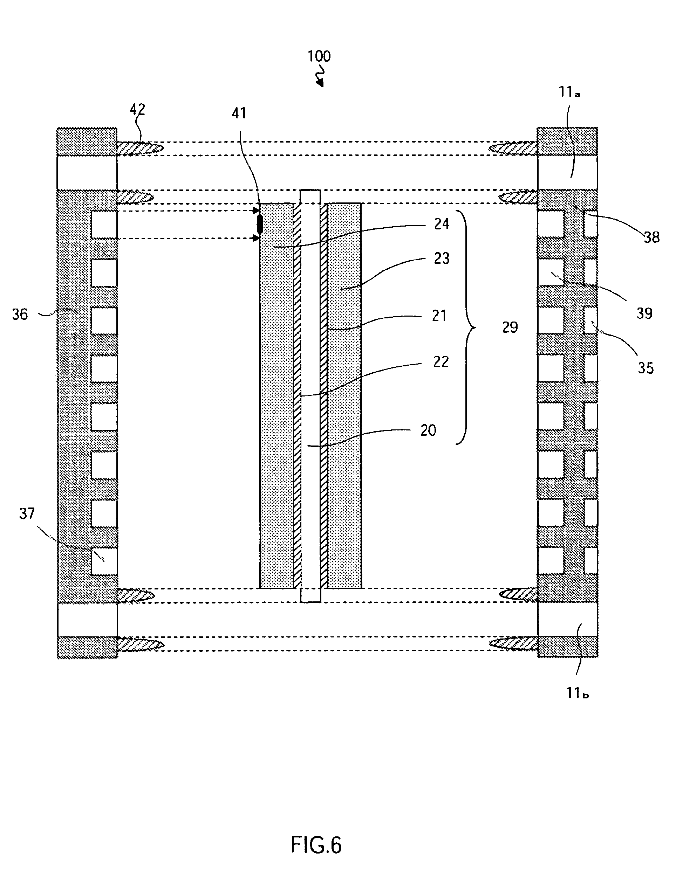

FIG.6 is an exploded cross-sectional view of fuel cell 100.
As shown in FIG.6, fuel electrode separator 36 has fuel gas channels 37 and air electrode separator 38 has oxide gas channels 39 and coolant channels 35. MEA 29 has polymer electrolyte membrane 20, air electrode catalyst layer 21, fuel electrode catalyst layer 22, air electrode gas diffusion layer 23, fuel electrode gas diffusion layer 24, and unique information section 41.

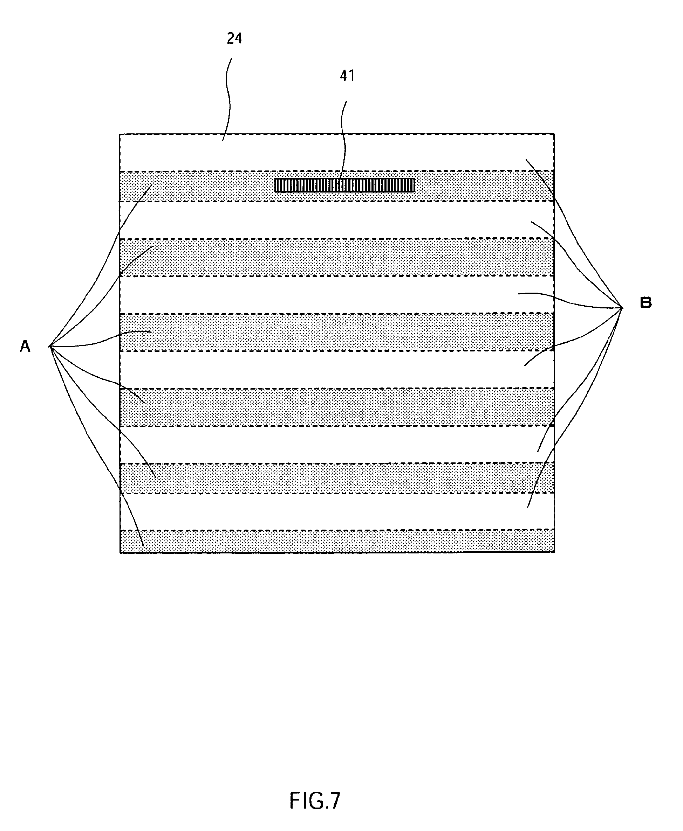

FIG.7 is a front view of fuel electrode gas diffusion layer 24 on which unique information section 41 is disposed.
Rows A in fuel electrode gas diffusion layer 24 indicate areas that do not come into contact with a separator (areas where gas channels are disposed) and rows B in fuel electrode gas diffusion layer 24 indicate areas that come into contact with the separator.

As such, in the present embodiment, since a unique information section is distanced from a separator, the unique information section does not receive a contact pressure applied by the separator, enabling to further reduce deterioration of the unique information section.

As shown in FIGS.6 and 7, unique information section 41 is disposed in a region that is an area on fuel electrode gas diffusion layer 24 in which fuel gas channel 37 is located (which does not come into contact with fuel electrode separator 36) and that is near coolant entry manifold 11a.

By disposing a unique information section in an area where the temperature change is small, deterioration of the unique information section by heat is prevented. It is thus possible to read unique information about the MEA from a unique information section of an MEA having been used for a long period of time.

As such, according to the present embodiment, unique information about an MEA can be obtained even only from the MEA, which is advantageous upon recycling the MEA. In addition, even from a unique information section of an MEA having been used for a long period of time, unique information about the MEA can be read.

### (Embodiment 2)

An MEA of Embodiment 2 is the same as that of Embodiment 1 except that the form of unique information section 41 of the MEA is different from that in Embodiment 1. Therefore, overlapping components other than unique information section 41 are denoted by the same reference numerals and description thereof is omitted.

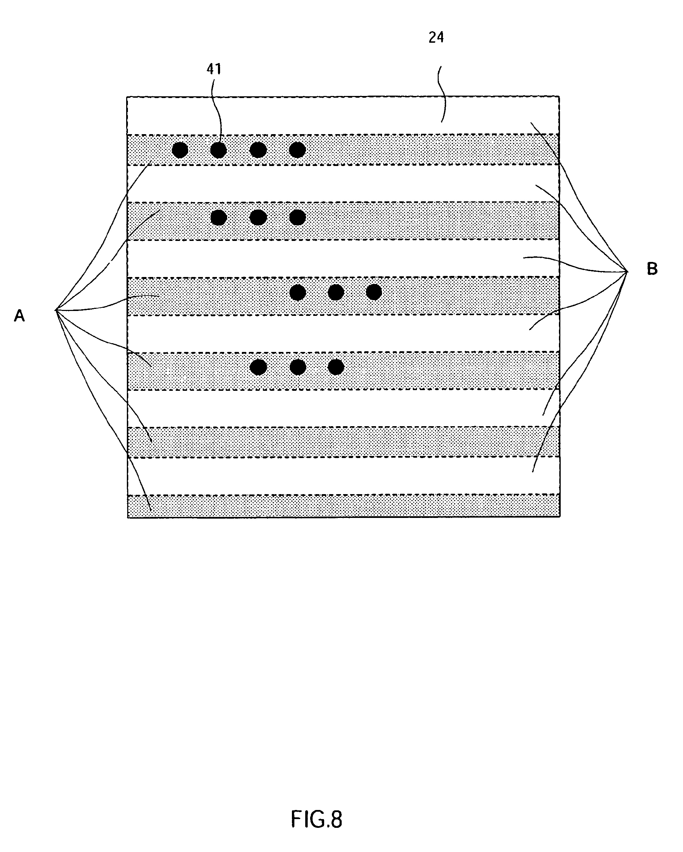

FIG.8 is a front view of fuel electrode gas diffusion layer 24 included in an MEA of Embodiment 2.

As shown in FIG.8, fuel electrode gas diffusion layer 24 has unique information sections 41. Rows A in fuel electrode gas diffusion layer 24 indicate areas that do not come into contact with a separator (areas where gas channels are disposed) and rows B in fuel electrode gas diffusion layer 24 indicate areas that come into contact with the separator.

As shown in FIG.8, in the present embodiment, unique information sections 41 are dots. In addition, unique information sections 41 are disposed to be located in a plurality of fuel gas channels 37 instead of in single gas channel 37.

By disposing unique information sections such that they are located in a plurality of channels, the area of the unique information sections can be made larger and more easy to recognize unique information recorded in the unique information sections. This facilitates visual recognition of the unique information sections.

### (Embodiment 3)

In Embodiment 3, an example in which a unique information section is disposed on a polymer electrolyte membrane will be described.

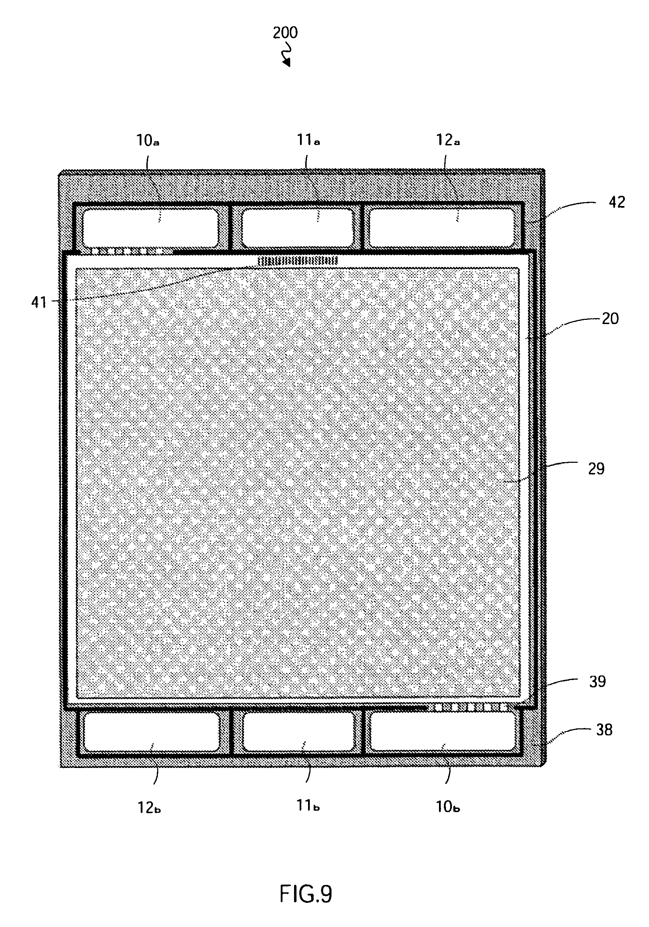

FIG.9 is a front view of fuel cell 200 including an MEA of Embodiment 3 where a fuel electrode separator is removed. Fuel cell 200 including an MEA of Embodiment 3 is the same as fuel cell 100 including an MEA of Embodiment 1 except that the disposition location of a unique information section is different. Components that overlap those of fuel cell 1 100 including an MEA of Embodiment 1 are denoted by the same reference numerals and description thereof is omitted.

As shown in FIG.9, unique information section 41 having recorded therein unique information is disposed in a region of polymer electrolyte membrane 20 near coolant entry manifold 11a.

FIG.10 is an exploded perspective view of MEA 29 of Embodiment 3. As shown in FIG.10, unique information section 41 is disposed in the part of polymer electrolyte membrane 20 that protrudes from gas diffusion layers 23 and 24.

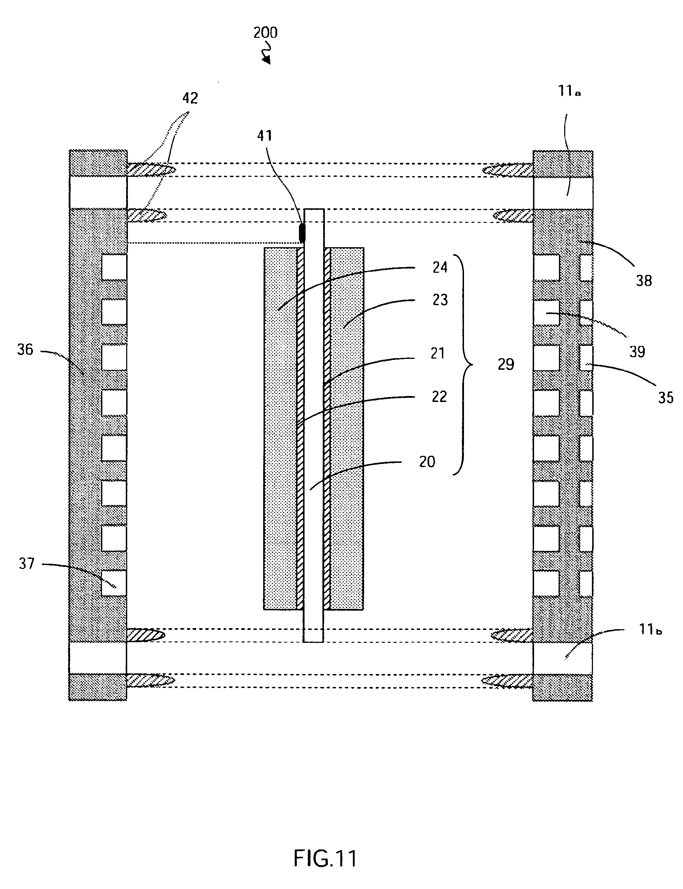

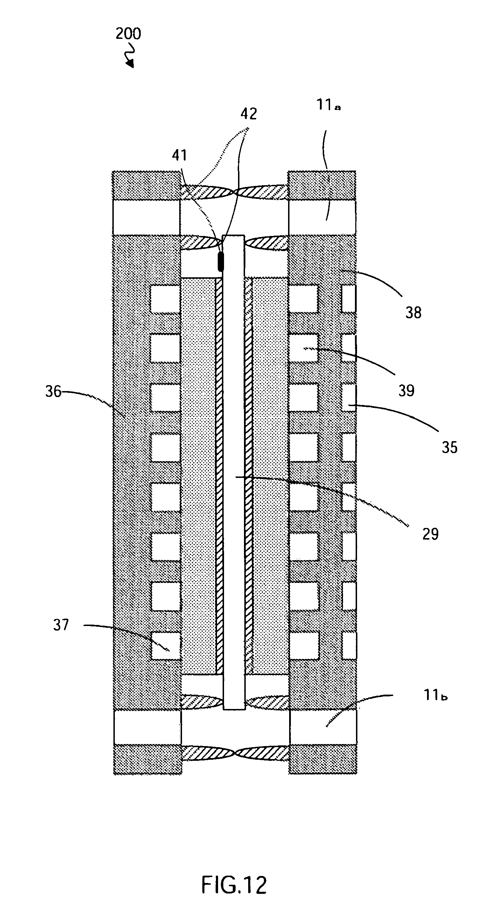

FIG. 11 is an exploded cross-sectional view of fuel cell 200. FIG.12 is a cross-sectional view of fuel cell 200.

As shown in FIG. 11, unique information section 41 is disposed in a region on polymer electrolyte membrane 20 between sealing section 42 and fuel electrode catalyst layer 22. In addition, as shown in FIG.12, unique information section 41 is distanced from fuel electrode separator 36. Therefore, the unique information section does not receive a contact pressure applied by the separator. It is thus possible to further reduce deterioration of the unique information section.

According to the present embodiment, unique information about an MEA can be obtained only from the MEA, which is advantageous in a recycling process similar to the embodiment 1. In addition, even from a unique information section of an MEA having been used for a long period of time, unique information about the MEA can be read.

### (Embodiment 4)

In Embodiments 4 to 8, an example in which a unique information section is disposed on an electrolyte membrane reinforcing member will be described.

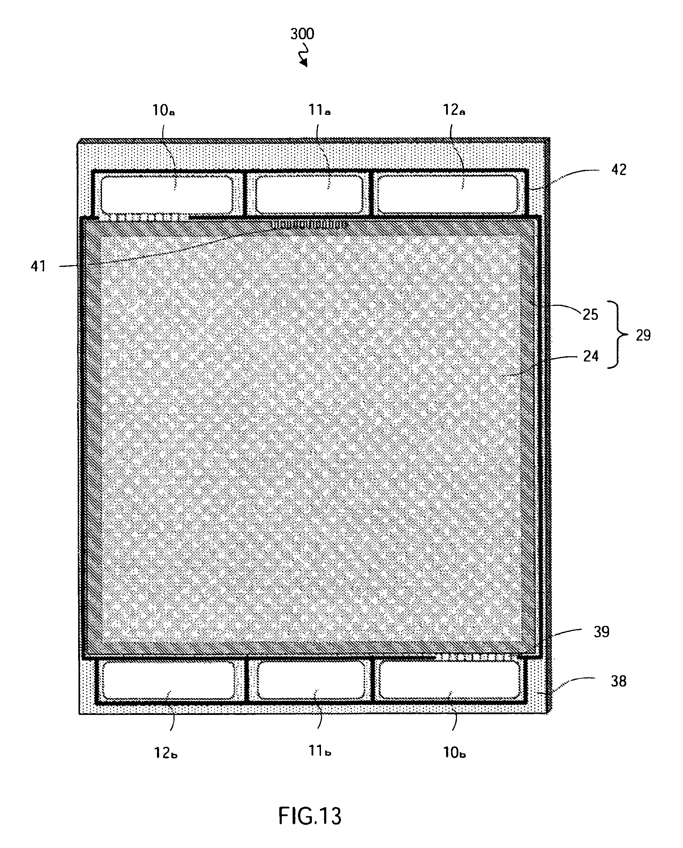

FIG.13 is a front view of fuel cell 300 including an MEA of Embodiment 4 where a fuel electrode separator is removed. Fuel cell 300 including an MEA of Embodiment 4 is the same as fuel cell 100 including an MEA of Embodiment 1 except that fuel cell 300 has an electrolyte membrane reinforcing member and the disposition location of a unique information section is different. Components that overlap those of fuel cell 100 including an MEA of Embodiment 1 are denoted by the same reference numerals and description thereof is omitted.

As shown in FIG.13, MEA 29 has electrolyte membrane reinforcing member 25. Unique information section 41 having recorded therein unique information is disposed in a region of electrolyte membrane reinforcing member 25 near coolant entry manifold 11a.

FIG.14 is an exploded perspective view of MEA 29 of Embodiment 4. As shown in FIG.14, electrolyte membrane reinforcing member 25 has a region that is not covered by a catalyst electrode (fuel electrode catalyst layer 22 and fuel electrode gas diffusion layer 24).

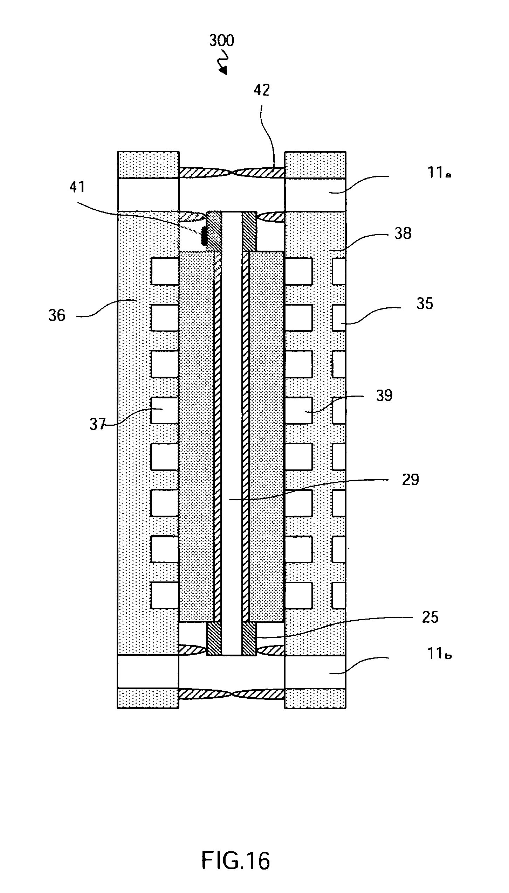

FIG.15 is an exploded cross-sectional view of fuel cell 300. FIG.16 is a cross-sectional view of fuel cell 300.
As shown in FIG.15, electrolyte membrane reinforcing member 25 is in contact with polymer electrolyte membrane 20 and holds a portion of polymer electrolyte membrane 20 that protrudes from a fuel electrode (fuel electrode catalyst layer 22 and fuel electrode gas diffusion layer 24) and an air electrode (air electrode catalyst layer 21 and air electrode gas diffusion layer 23). Meanwhile, electrolyte membrane reinforcing member 25 does not cover circumference of polymer electrolyte membrane 20. Unique information section 41 is disposed in a certain region of electrolyte membrane reinforcing member 25. The certain region on which unique information section 41 is disposed is placed between sealing section 42 and fuel electrode catalyst layer 22 and near coolant entry manifold 11a.

In addition, as shown in FIG.16, unique information section 41 is distanced from fuel electrode separator 36. Hence, unique information section 41 does not receive a contact pressure applied by fuel electrode separator 36, enabling to further reduce deterioration of the unique information section.

According to the present embodiment, unique information about an MEA can be obtained even only from the MEA, which is advantageous in a recycling process s imilar to the embodiment 1. In addition, even from a unique information section of an MEA having been used for a long period of time, unique information about the MEA can be read.

In Embodiment 4, an example is shown in which an electrolyte membrane reinforcing member is disposed in a periphery of a polymer electrolyte membrane (a portion protruding from catalyst electrodes) and does not cover a circumference of the polymer electrolyte membrane. In Embodiments 5 to 8, an example will be described in which an electrolyte membrane reinforcing member covers a circumference of a polymer electrolyte membrane.

### (Embodiment 5)

An MEA of Embodiment 5 is one having electrolyte membrane reinforcing member 25a instead of electrolyte membrane reinforcing member 25 of an MEA of Embodiment 4. Overlapping components other than electrolyte membrane reinforcing member 25a are denoted by the same reference numerals and description thereof is omitted.

FIG. 17 is a cross-sectional view of an MEA of Embodiment 5.
As shown in FIG. 17, MEA 29 has electrolyte membrane reinforcing member 25a. Unlike electrolyte membrane reinforcing member 25 of Embodiment 4, electrolyte membrane reinforcing member 25a covers a circumference of polymer electrolyte membrane 20.

### (Embodiment 6)

An MEA of Embodiment 6 is one having catalyst layers 21 a and 22a and electrolyte membrane reinforcing member 25b instead of catalyst layers 21 and 22 and electrolyte membrane reinforcing member 25a of an MEA of Embodiment 5. Thus, overlapping components other than electrolyte membrane reinforcing member 25b and catalyst layers 21 a and 22a are denoted by the same reference numerals and description thereof is omitted.

FIG.18 is a cross-sectional view of an MEA of Embodiment 6.
As shown in FIG.18, MEA 29 has electrolyte membrane reinforcing member 25b and catalyst layers 21a and 22a. The areas of catalyst layers 21a and 22a are smaller than the areas of gas diffusion layers 23 and 24. Electrolyte membrane reinforcing member 25b covers a circumference of polymer electrolyte membrane 20 protruding from catalyst layers 21 a and 22a and a circumference of catalyst layers (21 a and 22a). Unlike electrolyte membrane reinforcing member 25a, a part of electrolyte membrane reinforcing member 25b is covered by gas diffusion layers 24 and 23.

### (Embodiment 7)

An MEA of Embodiment 7 is one having polymer electrolyte membrane 20a and electrolyte membrane reinforcing member 25c instead of polymer electrolyte membrane 20 and electrolyte membrane reinforcing member 25b of an MEA of Embodiment 6. Thus, overlapping components other than polymer electrolyte membrane 20a and electrolyte membrane reinforcing member 25c are denoted by the same reference numerals and description thereof is omitted.

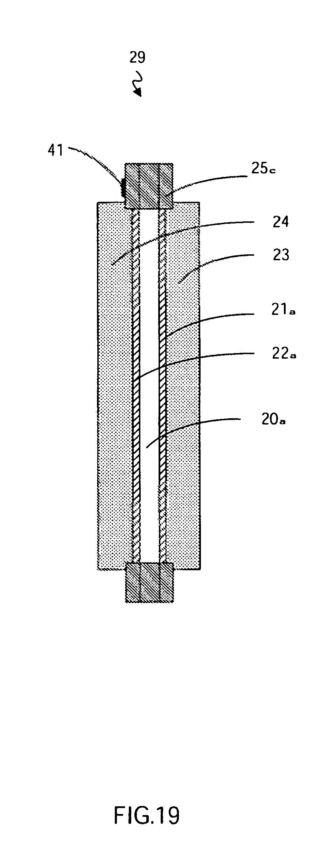

FIG.19 is a cross-sectional view of an MEA of Embodiment 7 of the present invention.
As shown in FIG.19, MEA 29 has polymer electrolyte membrane 20a and electrolyte member reinforcing member 25c. The area of polymer electrolyte membrane 20a is smaller than the areas of gas diffusion layers 23 and 24 and is the same as the areas of catalyst layers 21a and 22a. Electrolyte membrane reinforcing member 25c covers circumferences of polymer electrolyte membrane 20a and catalyst layers 21 a and 22a.

### (Embodiment 8)

An MEA of Embodiment 8 is one having polymer electrolyte membrane 20b and electrolyte membrane reinforcing member 25d instead of polymer electrolyte membrane 20a and electrolyte membrane reinforcing member 25c of an MEA of Embodiment 7. Thus, overlapping components other than polymer electrolyte membrane 20b and electrolyte membrane reinforcing member 25d are denoted by the same reference numerals and description thereof is omitted.

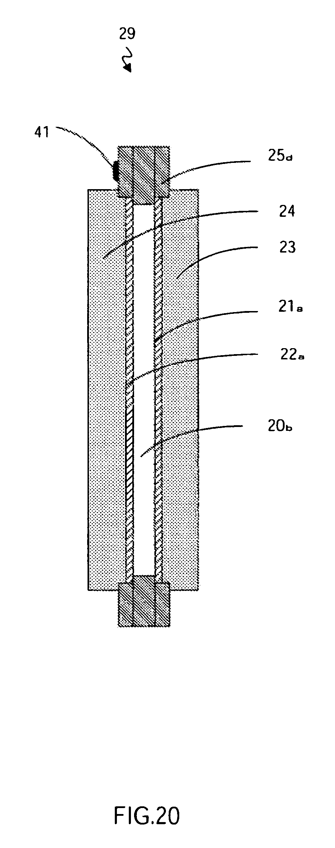

FIG.20 is a cross-sectional view of an MEA of Embodiment 8 of the present invention.
As shown in FIG.20, MEA 29 has polymer electrolyte membrane 20b and electrolyte membrane reinforcing member 25d. The area of polymer electrolyte membrane 20b is smaller than the areas of catalyst layers 21 a and 22a. As shown in FIG.20, the area of the polymer electrolyte member may be made smaller than the areas of the catalyst layers but in order to use the catalyst layers without waste it is preferred that the area of the polymer electrolyte membrane be made larger than the areas of the catalyst layers. Electrolyte membrane reinforcing member 25d covers circumferences of polymer electrolyte membrane 20b and catalyst layers 21 a and 22a.

As shown in Embodiments 5 to 8, by an electrolyte membrane reinforcing member covering an circumference of a polymer electrolyte membrane, the polymer electrolyte membrane can be reinforced more strongly and the form of the polymer electrolyte membrane can be maintained to improve handling of the polymer electrolyte membrane.

### (Embodiment 9)

In Embodiments 9 to 14, an example in which an MEA has a frame body section and a unique information section is disposed on the frame body section will be described.

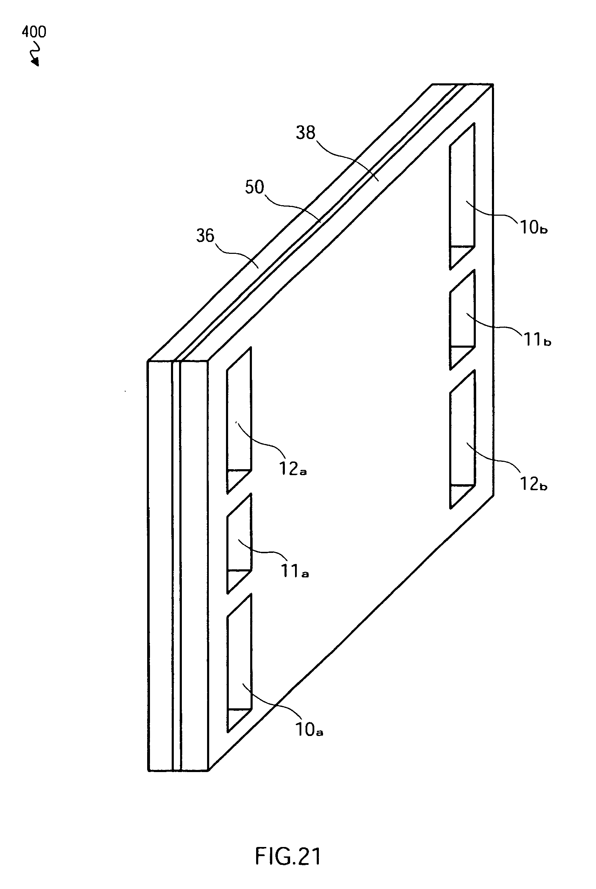

FIG.21 is a perspective view of a fuel cell including an MEA of Embodiment 9. As shown in FIG.21, fuel cell 400 has MEA 50 having a frame body section (hereinafter, referred to as a "frame body-integrated MEA"). Fuel cell 400 is the same as fuel cell 100 except that fuel cell 400 has frame body-integrated MEA 50. The same components as those of fuel cell 100 are denoted by the same reference numerals and description thereof is omitted.

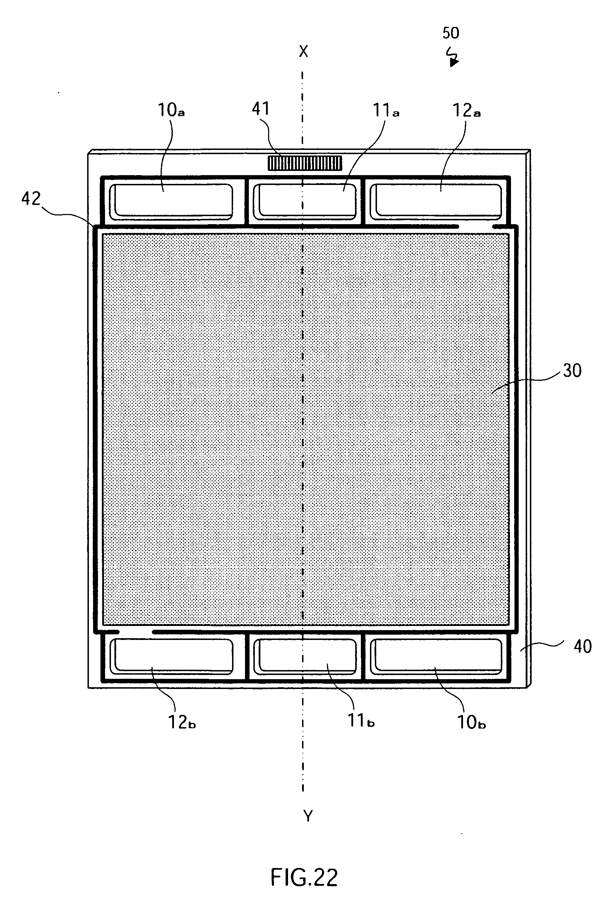

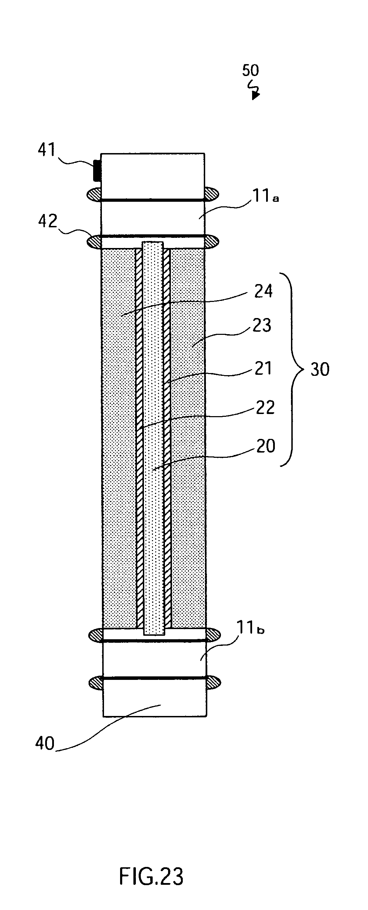

FIG.22 is a front view of frame body-integrated MEA 50 shown in FIG.21. FIG.23 is an XY cross-sectional view of frame body-integrated MEA 50 in FIG.22.

As shown in FIG.22, frame body-integrated MEA 50 has membrane-electrodes-complex 30 (hereinafter, simply referred to as "complex 30") and frame body section 40. Frame body section 40 has oxide gas entry manifold 10a, oxide gas outlet manifold 10b, fuel gas entry manifold 12a, fuel gas outlet manifold 12b, coolant entry manifold 11a, and coolant outlet manifold 11b. Frame body section 40 further has sealing section 42. Furthermore, unique information section 41 is disposed on frame body section 40. By disposing a unique information section on a frame body section of a frame body-integrated MEA, even only from the frame body-integrated MEA unique information about the MEA can be obtained.

As shown in FIG.23, complex 30 has polymer electrolyte membrane 20, air electrode catalyst layer 21, fuel electrode catalyst layer 22, air electrode gas diffusion layer 23, and fuel electrode gas diffusion layer 24. Frame body section 40 accommodates complex 30 such that complex 30 can come into contact with separators 36 and 38.

Unique information section 41 is disposed in a region of frame body section 40 near coolant entry manifold 11a. Specifically, unique information section 41 is disposed in a region near coolant entry manifold 11a and between sealing section 42 and an edge of frame body section 40.

According to the present embodiment, unique information about an MEA can be obtained even only from the MEA, which is advantageous in a recycling process similar to the embodiment 1. In addition, even from a unique information section of an MEA having been used for a long period of time, unique information about the MEA can be read.

### (Embodiment 10)

In Embodiment 10, an example in which a unique information section is disposed to be exposed to the exterior of a fuel cell stack will be described.

FIG.24 is a perspective view of fuel cell 500 including an MEA of Embodiment 10. Fuel cell 500 is the same as fuel cell 400 except that the disposition location of unique information section 41 is different. The same components as those of fuel cell 400 are denoted by the same reference numerals and description thereof is omitted.

As shown in FIG.24, fuel cell 500 has frame body-integrated MEA 50, fuel electrode separator 36, and air electrode separator 38. Unique information section 41 is disposed on a surface (circumference) of frame body-integrated MEA 50 that does not come into contact with the separators. Unique information section 41 is disposed at a location on the side that is closest to coolant entry manifold 11a. Since the thickness of frame body-integrated MEA (the width of the side) is normally several millimeters, it is large enough for the disposition of unique information section 41. As such, in the present embodiment, unique information section 41 is disposed in a region distanced from the separators and near coolant entry manifold 11a.

According to the present embodiment, a unique information section does not come into contact with separators and thus does not receive a contact pressure applied by the separators. Accordingly, deterioration of the unique information section can be further reduced. In addition, in the present embodiment, since the unique information section is disposed on a surface of a frame body section that does not come into contact with the separators, the unique information section is exposed to outside. Hence, when fuel cells including MEAs of the present embodiment are stacked together to produce a stack, unique information about the MEAs can be read without separating the stack.

### (Embodiment 11)

In Embodiments 11 and 12, an example in which a unique information section is disposed in a concave section formed in a frame body section will be described.

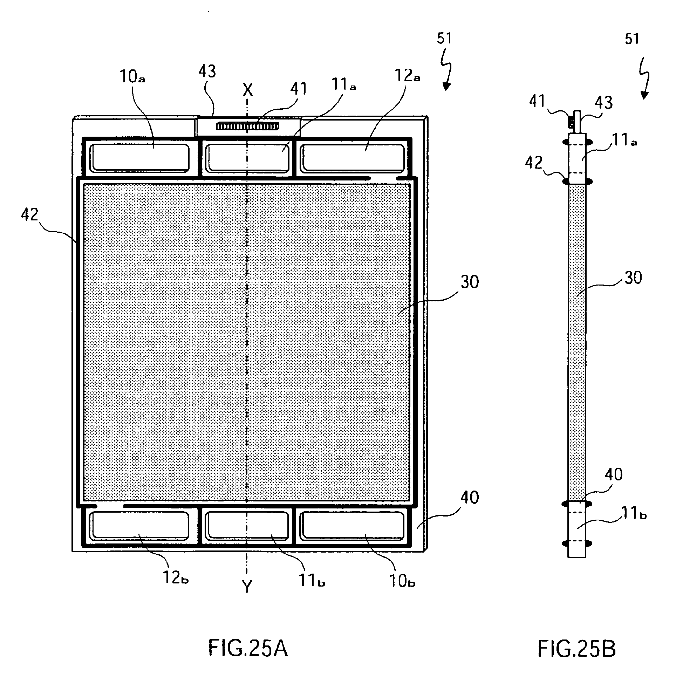

FIG.25A is a front view of frame body-integrated MEA 51 of a fuel cell of Embodiment 11. FIG. 25B is an XY cross-sectional view of frame body-integrated MEA 51 shown in FIG.25A. The same components as those of frame body-integrated MEA 50 are denoted by the same reference numerals and description thereof is omitted.

As shown in FIG.25A and FIG. 25B, frame body section 40 has, near coolant entry manifold 11a, concave section 43 indented in a thickness direction of MEA 51. Specifically, concave section 43 is located in a region near coolant entry manifold 11a and between sealing section 42 and an edge of frame body section 40. Concave section 43 is formed to reach the edge of frame body section 40. Unique information section 41 is disposed in concave section 43. Unique information section 41 is disposed near cooing medium entry manifold 11a. In addition, since unique information section 41 is disposed in concave section 43 of frame body section 40, even when frame body-integrated MEA 51 is held between separators, unique information section 41 is distanced from the separators.

According to the present embodiment, a unique information section does not come into contact with separators and thus does not receive a contact pressure applied by the separators. Accordingly, similar to Embodiment 10, deterioration of the unique information section can be reduced. In addition, when fuel cells comprising the MEAs of the present embodiment are stacked together to produce a stack, unique information sections are not exposed to outside and thus deterioration of the unique information sections caused by contamination or shock can be reduced.

### (Embodiment 12)

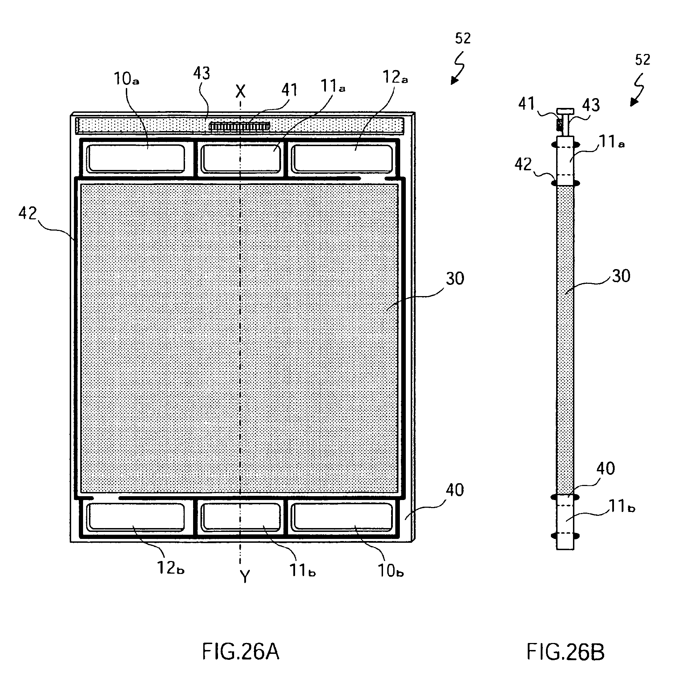

FIG. 26A is a front view of frame body-integrated MEA 52 of Embodiment 12 of the present invention. FIG. 26B is an XY cross-sectional view of frame body-integrated MEA 52 shown in FIG.26A. The same components as those of frame body-integrated MEA 50 are denoted by the same reference numerals and description thereof is omitted.

As shown in FIG.26A and FIG. 26B, frame body section 40 has, near coolant entry manifold 11a, concave section 43 indented in a thickness direction of an MEA. Specifically, concave section 43 is formed in a region between sealing section 42 and an edge of frame body section 40. Concave section 43 is not formed at the edge of frame body section 40. Unique information section 41 is disposed in a region of concave section 43 near the coolant entry manifold. Unique information section 41 is disposed near coolant entry manifold 11a. Since unique information section 41 is disposed in concave section 43 of frame body section 40, even when frame body-integrated MEA 52 is held between separators, unique information section 41 is distanced form the separators.

As such, according to the present embodiment, a unique information section does not come into contact with separators and thus does not receive a contact pressure applied by the separators. Accordingly, similar to Embodiment 10, deterioration of the unique information section can be reduced. In addition, when fuel cells including MEAs of the present embodiment are stacked together to produce a stack, unique information sections are hermetically enclosed in respective concave sections of frame body sections and thus deterioration of the unique information sections caused by contamination or shock can be further reduced over Embodiment 11.

### (Embodiment 13)

In Embodiment 13, an example in which a frame body-integrated MEA is designed to be longer than separators will be described.
FIG.27A is an exploded perspective view of fuel cell 600 including MEA 53 of Embodiment 13 of the present invention. FIG. 27B is an enlarged X cross-sectional view of fuel cell 600 shown in FIG.27A.

As shown in FIG.27A and FIG.27A, frame body-integrated MEA 53 is longer in an up and down direction in the drawing than separators 36 and 38. Therefore, when frame body-integrated MEA 53 is held between separator 36 and separator 38, a part of frame body section 40 protrudes from the separators in a plane direction of MEA 53 to form protruding section 44 of frame body section 40.

Unique information section 41 is disposed on protruding section 44 and further near coolant entry manifold 11a. In the present embodiment, unique information section 41 is disposed in a region distanced from the separators and near coolant entry manifold 11a.

According to the present embodiment, a unique information section does not come into contact with separators and thus does not receive a contact pressure applied by the separators. Accordingly, similar to Embodiment 10, deterioration of the unique information section can be reduced. In addition, in the present embodiment, since the unique information section is disposed on a protruding section of a frame body section, the unique information section is exposed to outside. Hence, when fuel cells including MEAs of the present embodiment are stacked together to produce a stack, unique information about the MEAs can be read without separating the stack.

### (Embodiment 14)

In Embodiment 14, an example in which a separator has a concave section will be described.

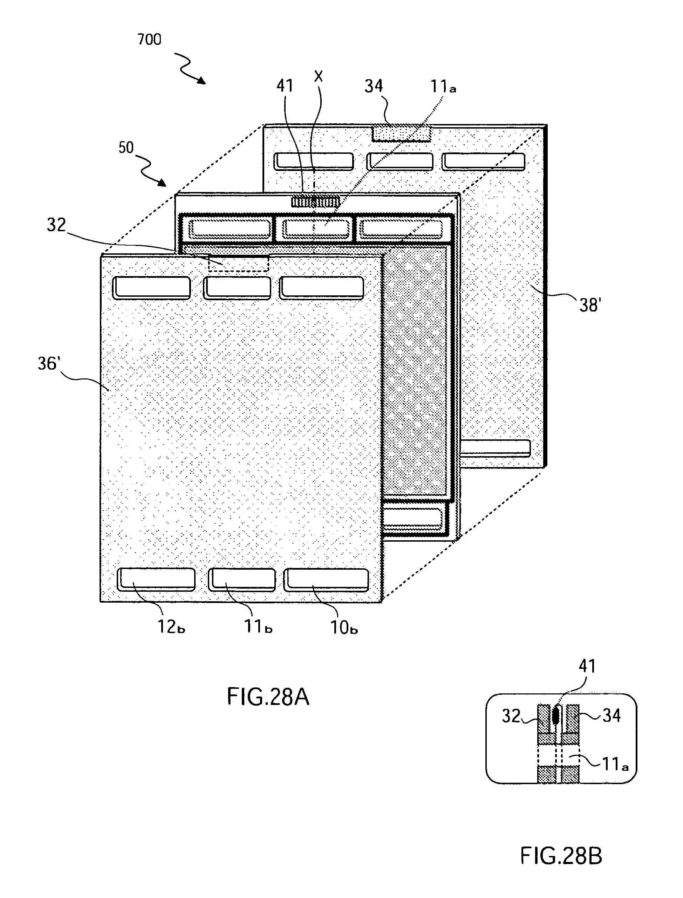

FIG.28A is an exploded perspective view of fuel cell 700 of Embodiment 14. FIG. 28B is an enlarged X cross-sectional view of fuel cell 700 shown in FIG.28A.

As shown in FIG.28A and FIG. 28B, separator 36' has concave section 32. Concave section 32 is formed on a surface of separator 36' on a side that comes into contact with an MEA, and is indented in a thickness direction of separator 36'. Separator 38' has concave section 34. Concave section 34 is formed on a surface of separator 38' on a side that comes into contact with the MEA, and is indented in a thickness direction of separator 38'. The locations of concave sections 32 and 34 are set such that when a frame body-integrated MEA is held between separators 36' and 38' concave sections 32 and 34 are disposed at a location where unique information section 41 is disposed. Thus, unique information section 41 is disposed on frame body section 40 so as to be located in concave sections 32 and 34 of separators 36' and 38'. As a result, unique information section 41 is distanced from separators 36' and 38'.

According to the present embodiment, a unique information section does not come into contact with separators and thus does not receive a contact pressure applied by the separators. Accordingly, similar to Embodiment 10, deterioration of the unique information section can be reduced. In addition, when fuel cells comprising the MEAs of the present embodiment are stacked together to produce a stack, unique information sections are not exposed to outside and thus deterioration of the unique information sections caused by contamination or shock can be reduced.

This application claims priority to Japanese Patent Application Nos.2008-061175, 2008-061176, 2008-061177, and 2008-061178, filed March 11, 2008.

### Industrial Applicability

In a fuel cell employed in the method of the present invention, since an MEA has a unique information section, when the MEA is recycled, unique information about the MEA can be easily determined. In addition, since the unique information section is disposed in an area of the fuel cell where the temperature change is small, the unique information section is not deteriorated and even after the fuel cell has been used for a long period of time, the unique information about the MEA can be read. Therefore, the fuel cell of the present invention can be easily recycled.

## Claims

1. A method of recycling fuel cells, comprising:*
removing separators from the fuel cell comprising a membrane electrode assembly; and a pair of separators which hold the membrane electrode assembly between the separators,
reading unique information from a unique information section of a membrane electrode assembly;
sorting out a membrane electrode assembly that is appropriate for recycling, based on the unique information; and
collecting platinum from the membrane electrode assembly,
**characterized in that**:
the membrane electrode assembly comprises a polymer electrolyte membrane; a pair of catalyst electrodes holding the polymer electrolyte membrane between the catalyst electrodes, the pair of catalyst electrodes consisting of a fuel electrode and an air electrode; and a unique information section,
the fuel electrode has a fuel electrode catalyst layer which is in contact with the polymer electrolyte membrane; and a fuel electrode gas diffusion layer which is in contact with the fuel electrode catalyst layer,
the air electrode has an air electrode catalyst layer which is in contact with the polymer electrolyte membrane; and an air electrode gas diffusion layer which is in contact with the air electrode catalyst layer,
unique information about the membrane electrode assembly is recorded in the unique information section, and
the unique information section is disposed on the fuel electrode gas diffusion layer or the air electrode gas diffusion layer.

2. A method of recycling fuel cells, comprising:
removing separators from the fuel cell comprising a membrane electrode assembly; and a pair of separators which hold the membrane electrode assembly between the separators,
reading unique information from a unique information section of a membrane electrode assembly;
sorting out a membrane electrode assembly that is appropriate for recycling, based on the unique information; and
collecting platinum from the membrane electrode assembly,
**characterized in that**:
the membrane electrode assembly comprises a polymer electrolyte membrane; a pair of catalyst electrodes holding the polymer electrolyte membrane between the catalyst electrodes, the pair of catalyst electrodes consisting of a fuel electrode and an air electrode; and a unique information section, wherein
a part of the polymer electrolyte membrane protrudes from the catalyst electrodes in a plane direction of the polymer electrolyte membrane,
unique information about the membrane electrode assembly is recorded in the unique information section, and
the unique information section is disposed in the part of the polymer electrolyte membrane protruding from the catalyst electrodes.

3. The method of recycling fuel cell according to claim 1 or claim 2, wherein the unique information includes information about catalyst compositions of the catalyst electrodes.

4. The method of recycling fuel cell according to claim 1 or claim 2, wherein the unique information includes platinum content of the catalyst electrodes.

5. The method of recycling fuel cell according to claim 1 or claim 2, wherein
each of the pair of separators has a coolant entry manifold, and
the unique information section is disposed near the coolant entry manifold.

6. The method of recycling fuel cell according to claim 1 or claim 2, wherein the unique information section is a one-dimensional code, a two-dimensional code, dots, a character string, or an IC chip.

## Patentansprüche

1. Verfahren zum Verwerten von Brennstoffzellen, umfassend:
Entfernen von Separatoren aus der Brennstoffzelle umfassend einen Membranelektrodenaufbau, und ein Paar Separatoren, welche den Membranelektrodenaufbau zwischen den Separatoren halten;
Lesen individueller Information von einem individuellen Informationsbereich eines Membranelektrodenaufbaus;
Aussortieren eines Membranelektrodenaufbaus, welcher zum Verwerten geeignet ist, basierend auf der individuellen Information; und
Sammeln von Platin aus dem Membranelektrodenaufbau,
**dadurch gekennzeichnet, dass**:
der Membranelektrodenaufbau umfasst: eine Polymerelektrolytmembran; ein Paar Katalysatorelektroden, welche die Polymerelektrolytmembran zwischen den Katalysatorelektroden halten, wobei das Paar Katalysatorelektroden aus einer Brennstoffelektrode und einer Luftelektrode bestehen, und einen individuellen Informationsbereich,
die Brennstoffelektrode eine Brennstoffelektrodenkatalysatorschicht, welche sich in Kontakt mit der Polymerelektrolytmembran befindet, und eine Brennstoffgasdiffusionsschicht aufweist, welche sich in Kontakt mit der Brennstoffelektrodenkatalysatorschicht befindet,
die Luftelektrode eine Luftelektrodenkatalysatorschicht, welche sich in Kontakt mit der Polymerelektrolytmembran befindet, und eine Luftelektrodengasdiffusionsschicht aufweist, welche sich in Kontakt mit der Luftelektrodenkatalysatorschicht befindet,
die individuelle Information über den Membranelektrodenaufbau in dem individuellen Informationsbereich aufgezeichnet ist, und
der individuelle Informationsbereich auf der Brennstoffelektrodengasdiffusionsschicht oder der Luftelektrodengasdiffusionsschicht angeordnet ist.

2. Verfahren zum Verwerten von Brennstoffzellen, umfassend:
Entfernen von Separatoren aus der Brennstoffzelle umfassend einen Membranelektrodenaufbau, und ein Paar Separatoren, welche den Membranelektrodenaufbau zwischen den Separatoren halten;
Lesen individueller Information von einem individuellen Informationsbereich eines Membranelektrodenaufbaus;
Aussortieren eines Membranelektrodenaufbaus, welcher zum Verwerten geeignet ist, basierend auf der individuellen Information; und
Sammeln von Platin aus dem Membranelektrodenaufbau,
**dadurch gekennzeichnet, dass**:
der Membranelektrodenaufbau umfasst: eine Polymerelektrolytmembran; ein Paar Katalysatorelektroden, welche die Polymerelektrolytmembran zwischen den Katalysatorelektroden halten, wobei das Paar Katalysatorelektroden aus einer Brennstoffelektrode und einer Luftelektrode bestehen, und einen individuellen Informationsbereich, wobei
sich ein Teil der Polymerelektrolytmembran von den Katalysatorelektroden in einer Ebenenrichtung der Polymerelektrolytmembran erstreckt,
die individuelle Information über den Membranelektrodenaufbau in dem individuellen Informationsbereich aufgezeichnet ist, und
der individuelle Informationsbereich in dem Teil der Polymerelektrodenmembran angeordnet ist, welcher sich von den Katalysatorelektroden erstreckt.

3. Verfahren zum Verwerten von Brennstoffzellen, wobei die individuelle Information Informationen über die Katalysatorzusammensetzung der Katalysatorelektroden umfasst.

4. Verfahren zum Verwerten von Brennstoffzellen nach Anspruch 1 oder 2, wobei die individuelle Information den Platingehalt der Katalysatorelektroden umfasst.

5. Verfahren zum Verwerten von Brennstoffzellen nach Anspruch 1 oder 2, wobei jedes Paar der Separatoren einen Kühlmittelsammelleitungseinlass aufweist, und
der individuelle Informationsbereich in der Nähe des Kühlmittelsammelleitungseinlass angeordnet ist.

6. Verfahren zum Verwerten von Brennstoffzellen nach Anspruch 1 oder 2, wobei der individuelle Informationsbereich ein eindimensionaler Code, ein zweidimensionaler Code, punkte, eine Zeichenfolge oder ein IC Chip ist.

## Revendications

1. Procédé de recyclage de piles à combustible, comprenant les étapes consistant à :
- retirer des séparateurs de la pile à combustible comprenant un ensemble d'électrode en membrane ; et une paire de séparateurs qui maintiennent l'ensemble de d'électrode en membrane entre les séparateurs ;
- lire une information unique à partir d'une section d'information unique d'un ensemble d'électrode en membrane ;
- sélectionner un ensemble d'électrode en membrane approprié pour un recyclage, en se fondant sur l'information unique ; et
- recueillir le platine de l'ensemble d'électrode en membrane ;
- **caractérisé en ce que** :
- l'ensemble d'électrode en membrane comprend une membrane d'électrolyte polymère ; une paire d'électrodes de catalyseur maintenant la membrane d'électrolyte polymère entre les électrodes de catalyseur, la paire d'électrodes de catalyseur étant composée d'une électrode à combustible et d'une électrode à air ; et une section d'information unique ;
- l'électrode à combustible comporte une couche de catalyseur d'électrode à combustible qui est au contact de la membrane d'électrolyte polymère ; et une couche de diffusion de gaz d'électrode à combustible qui est au contact de la couche de catalyseur d'électrode à combustible ;
- l'électrode à air comporte une couche de catalyseur d'électrode à air qui est au contact de la membrane d'électrolyte polymère ; et une couche de diffusion de gaz d'électrode à air qui est au contact de la couche de catalyseur d'électrode à air ;
- l'information unique sur l'ensemble d'électrode en membrane est enregistrée dans la section d'information unique ; et
- la section d'information unique est disposée sur la couche de diffusion de gaz d'électrode à combustible ou la couche de diffusion de gaz d'électrode à air.

2. Procédé de recyclage de piles à combustible, comprenant les étapes consistant à:
- retirer des séparateurs de la pile à combustible comprenant un ensemble d'électrode en membrane ; et une paire de séparateurs qui maintiennent l'ensemble de d'électrode en membrane entre les séparateurs ;
- lire une information unique à partir d'une section d'information unique d'un ensemble d'électrode en membrane ;
- sélectionner un ensemble d'électrode en membrane approprié pour un recyclage, en se fondant sur l'information unique ; et
- recueillir le platine de l'ensemble d'électrode en membrane ;
- **caractérisé en ce que** :
- l'ensemble d'électrode en membrane comprend une membrane d'électrolyte polymère ; une paire d'électrodes de catalyseur maintenant la membrane d'électrolyte polymère entre les électrodes de catalyseur, la paire d'électrodes de catalyseur étant composée d'une électrode à combustible et d'une électrode à air ; et une section d'information unique, pour lequel :
- une partie de la membrane d'électrolyte polymère dépasse des électrodes de catalyseur dans la direction du plan de la membrane d'électrolyte polymère ;
- l'information unique sur l'ensemble d'électrode en membrane est enregistrée dans la section d'information unique ; et
- la section d'information unique est disposée dans la partie de la membrane d'électrolyte polymère dépassant des électrodes de catalyseur.

3. Procédé de recyclage de piles à combustible selon la revendication 1 ou la revendication 2, pour lequel l'information unique comprend une information sur les compositions du catalyseur des électrodes de catalyseur.

4. Procédé de recyclage de piles à combustible selon la revendication 1 ou la revendication 2, pour lequel l'information unique comprend la teneur en platine des électrodes de catalyseur.

5. Procédé de recyclage de piles à combustible selon la revendication 1 ou la revendication 2, pour lequel :
- chaque séparateur de la paire de séparateurs comporte un collecteur d'entrée de fluide de refroidissement ; et
- la section d'information unique est disposée près du collecteur d'entrée de fluide de refroidissement.

6. Procédé de recyclage de piles à combustible selon la revendication 1 ou la revendication 2, pour lequel la section d'information unique comporte un code unidimensionnel, un code bidimensionnel, des points, une chaîne de caractères ou une puce de circuit intégré.
